# EUROPEAN PATENT APPLICATION

(11) **EP 1 107 474 A2**
(43) Date of publication of application: **13.06.2001**
(21) Application number: 00126784.8
(22) Date of filing: 06.12.2000
(51) Int. Cl.: H04B 7/02

(54) **Wireless communication base station**

(30) Priority: 06.12.1999 JP 34685899
(71) Applicant: MATSUSHITA ELECTRIC INDUSTRIAL CO., LTD., Kadoma-shi, Osaka-fu (JP)
(72) Inventor: Ikeda, Kazuhiko, Mattou-shi, Ishikawa (JP); Matsubara, Naoki, Tokyo (JP); Higashida, Yasushi, Yokohama-shi, Kanagawa (JP)
(74) Representative: Grünecker, Kinkeldey, Stockmair & Schwanhäusser Anwaltssozietät

(57) **Abstract**

A plurality of receiving sections are arranged within a single receiving unit. For instance, a first receiving unit 11a is equipped with two receiving sections 12a and 12c. For example, in the case that a failure happens to occur in the first receiving unit 11a, the base station is arranged in such a manner that another receiving section 12b belonging to a diversity receiving system of the same sector is located in a second receiving unit 11b operated under normal condition. As a result, even when a failure happens to occur in any one of arbitrary units, the receiving functions of the respective sectors can function as a single branch under normal condition, although the diversity gain is lowered.

## Description

### BACKGROUND OF THE INVENTION

### 1.Field of the Invention

The present invention is related to a wireless communication base station arranged, while maintaining a wireless communication when a communication failure happens to occur, by utilizing a diversity system without securing an auxiliary system.

### 2.Description of the Related Art

Generally speaking, high reliability as well as high maintenance performance are required in wireless communication base stations. For instance, in a wireless communication base station, both a transmission unit and a receiving unit are formed as a unit structure detachably mounted on a main body of a base station apparatus. When a communication failure happens to occur in this unit, the malfunction unit may be replaced by a new unit within a short time.

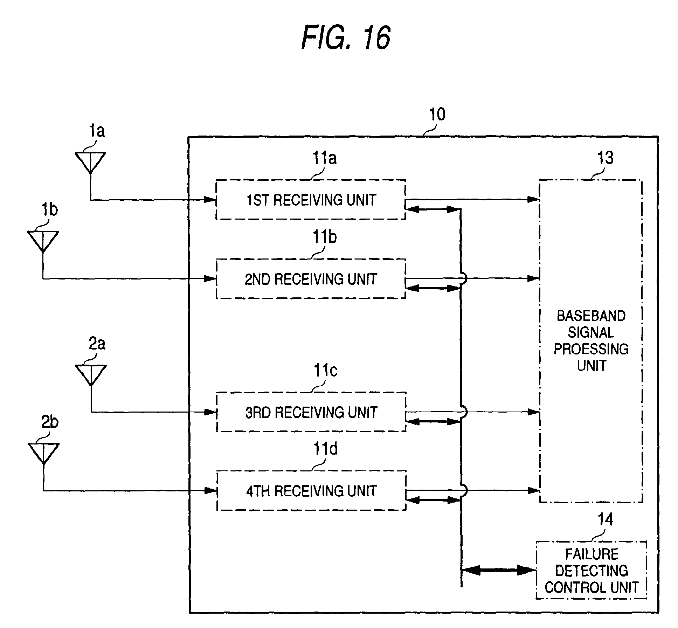

Fig. 16 is a schematic block diagram to show a receiving system of a conventional wireless base station. In Fig. 16, both a first sector zeroth-system antenna 1a and a first sector first-system antenna 1b are employed in an antenna diversity receiving within a first sector, respectively. Also, both a second sector zeroth-system antenna 2a and a second sector first-system antenna 2b are employed in an antenna diversity receiving within a second sector, respectively. The signals received by the respective antennas are inputted into a main body 10 of a base station apparatus. In a first receiving unit 11a to a fourth receiving unit 11d, a desirable signal is received among the signals received by the antennas connected to the respective receiving units, and then, this received desirable signal is processed by a baseband signal processing unit 13.

A failure sensing/controlling unit 14 senses failures of the first receiving unit 11a to the fourth receiving unit lid, and executes a process operation such as an interruption of a power supply of a receiving unit, if required. In such a case that a replacement of receiving units is needed based upon a sense result of the failure sensing/controlling unit 14, a maintenance worker executes a process operation for replacing the relevant receiving units.

Also, while the conventional wireless communication base station is equipped with both an operation system and an auxiliary system, this wireless communication base station is arranged in such a manner that when a failure happens to occur in the operation system, this troubled operation system is switched to the auxiliary system. For example, in Japanese Laid-open Patent Application No. Hei-10-322243, the following arrangement has been proposed. That is, while the antenna selecting unit is provided in the wireless base station, the antennas are switched with respect to the operation system and the auxiliary system.

Also, in the case that an antenna is installed at a high place such as a steel tower in order to increase a line-of-sight distance of a wave propagation, a receiving signal amplifying means may be provided in the vicinity of the antenna so as to compensate for a transmission loss occurred in a transmission path from the antenna installed on the high place up to a main body of a base station apparatus. Since this receiving signal amplifying means is installed on the high place, this receiving signal amplifying means is made in a compact unit form, and can be readily handled in maintenance works.

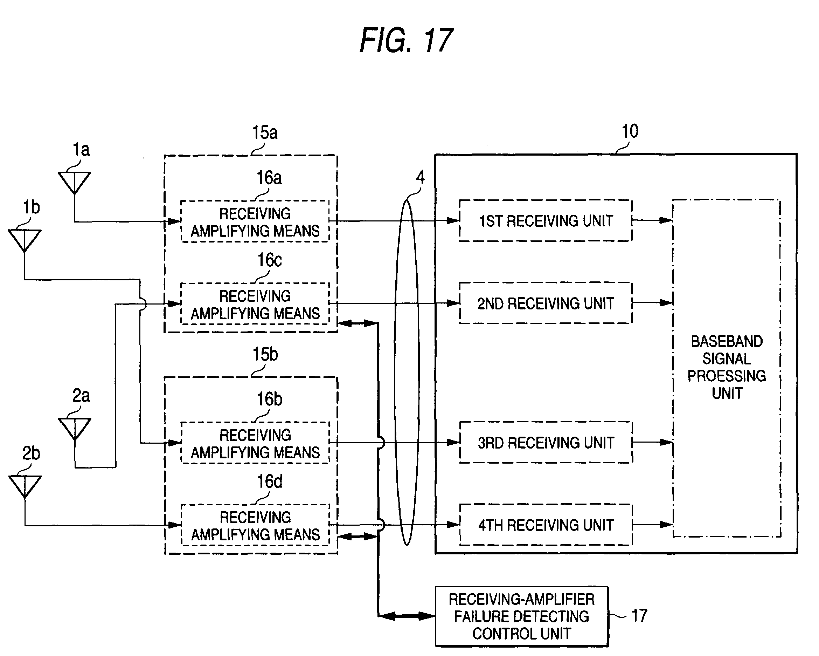

Fig. 17 is a schematic block diagram to show a receiving system of a conventional wireless base station equipped with a receiving signal amplifying means. In Fig. 17, both a first sector zeroth-system antenna 1a and a first sector first-system antenna 1b are employed in an antenna diversity receiving within a first sector, respectively. Also, both a second sector zeroth-system antenna 2a and a second sector first-system antenna 2b are employed in an antenna diversity receiving within a second sector, respectively. The signals received by the respective antennas are inputted into either a first receiving signal amplifying unit 15a or a second receiving signal amplifying unit 15b. The levels of the receiving signals are amplified by receiving signal amplifying means 16a, 16b, 16c, and 16d provided in the first receiving signal amplifying unit 15a and the second receiving signal amplifying unit 15b, and thereafter, the amplified receiving signals are transferred via a coaxial cable 4 to a main body 10 of a base station apparatus.

Also, a receiving signal amplifying unit failure sensing/controlling unit 17 senses failures occurred in the first receiving signal amplifying unit 15a and the second receiving signal amplifying unit 15b. When a failure happens to occur, the receiving signal amplifying unit failure sensing/control unit 17 executes a process operation such as an interruption of power supplies of the first receiving signal amplifying unit 15a and the second receiving signal amplifying unit 15b, if necessary. In the case that the first receiving signal amplifying unit 15a and the second receiving signal amplifying unit 15b are required to be replaced based upon a sensing result made by the receiving signal amplifying unit failure sensing/control unit 17, a maintenance worker executes a replacing process operation of the relevant receiving signal amplifying units.

However, since one receiving unit is provided with respect to one antenna in the conventional wireless communication base station, when one receiving unit owns a plurality of antennas, a total number of receiving units is increased. Thus, there is such a problem that the apparatus becomes bulky. Also, since the receiving units require connectors for the housing and the input/output interfaces, if a plurality of functions are contained in a single receiving unit, then the integration degree of the apparatus may be increased. However, as explained in the above-described arrangement, in such a case that a plurality of receiving systems are contained in a single receiving unit, even when a failure happens to occur only in on one receiving system, the functions of the plural receiving systems are stopped while the troubled receiving unit is replaced, namely during the maintenance work. There are other problems that the communication area and also the communication capacity would be largely reduced.

Furthermore, when the wireless communication base station owns both the operation system and the auxiliary system, the receiving system apparatus would become bulky. Also, since the loss occurs in the switching unit for the operation system and the auxiliary system, there is a risk that the quality of the wireless communication would be lowered. Further, there is such a possibility that a failure happens to occur in the switching unit itself. In such a failure case, this failure may cause a major factor to lower the reliability of the base station apparatus itself. In addition, when the failure happens to occur in the receiving signal amplifying unit employed in the receiving signal amplifying unit, since lengthy time is required in the maintenance work such as the unit replacement, there is another possibility that the communication area and also the communication capacity are largely lowered for a long time period.

### SUMMARY OF THE INVENTION

The present invention has been made to solve the above-explained problems, and therefore, has an object to provide a compact wireless communication base station capable of carrying out a wireless communication without having an auxiliary system, and also without largely lowering a communication capacity even when a failure happens to occur.

A wireless communication base station, according to the present invention, is featured by that in a wireless communication base station for executing a wireless communication by subdividing the own wireless cell into a plurality of sectors, the wireless communication base station is provided with a plurality of antennas for performing an antenna diversity receiving with respect to each of the sectors; a plurality of receiving means for processing receiving signals received by these antennas; among these receiving means, a plurality of receiving means for processing signals received by antennas of different sectors are employed in the same receiving unit; and the signals received by the antennas of the same sector are received/processed by the different receiving unit. With employment of such an arrangement, in the case that a failure happens to occur in one of arbitrary receiving units, another receiving means within the diversity receiving system of the same sector to the receiving unit operable under normal condition.

Also, a wireless communication base station, according to the present invention, is featured by that in such a wireless communication base station for performing a wireless communication, while the own wireless cell is subdivided into at least four sectors, the receiving means provided in the receiving unit is so arranged as to process receiving signals received by antennas of sectors different from each other, which are not located adjacent to each other. With employment of such an arrangement, in the case that a failure happens to occur in one of arbitrary receiving units, another receiving means within the diversity receiving system of the same sector is located in the receiving unit operable under normal condition, and also, the diversity functions are operable under normal conditions in the adjacent sectors.

Also, a wireless communication base station, according to the present invention, is featured by such a wireless communication base station for performing wireless communication, while the own wireless cell is subdivided into a plurality of sectors, comprising: a plurality of antennas installed in order that the plural sectors execute antenna diversity receiving with respect to each of the sectors; a main body of a base station apparatus for processing receiving signals; receiving signal amplifying means for amplifying the receiving signals received by the antennas; a coaxial cable for transmitting the receiving signals between the receiving signal amplifying means and the main body of the base station apparatus; and the same receiving signal amplifying unit provided with plural sets of such receiving signal amplifying means for amplifying signals received by different sectors among said receiving signal amplifying means; wherein: the signals received by the antennas of the same sector are amplified by the different receiving signal amplifying units. In other words, with employment of such an arrangement, when a failure happens to occur in one of arbitrary receiving signal amplifying units, another receiving signal amplifying means is located in such a unit operable under normal condition within the diversity receiving system of the same sector.

Also, a wireless communication base station, according to the present invention, is featured by that in such a wireless communication base station for performing a wireless communication, while the wireless cell is subdivided into at least four sectors, the receiving signal amplifying means provided in the receiving signal amplifying unit is so arranged as to amplify receiving signals received by antennas of sectors different from each other, which are not located adjacent to each other. In other words, with employment of such an arrangement, when a failure happens to occur in one of arbitrary receiving signal amplifying units, another receiving signal amplifying means is located in such a unit operable under normal condition within the diversity receiving system of the same sector. Also, the diversity functions are also operable under normal condition in the adjoining sectors.

Also, a wireless communication base station, according to the present invention, is featured by such a wireless communication base station for performing wireless communication, while the own wireless cell is subdivided into a plurality of sectors, comprising: a plurality of antennas installed in order that the plural sectors execute antenna diversity receiving with respect to each of the sectors; a main body of a base station apparatus for processing receiving signals; receiving signal amplifying means for amplifying the receiving signals received by the antennas; a coaxial cable for transmitting the receiving signals between the receiving signal amplifying means and the main body of the base station apparatus; and the same receiving signal amplifying unit provided with plural sets of such receiving signal amplifying means for amplifying signals received by different sectors among said receiving signal amplifying means; wherein: the signals received by the antennas of the same sector are amplified by the different receiving signal amplifying units; the main body of the base station apparatus is comprised of: receiving means for processing the receiving signals received by the antennas; and a plurality of receiving units provided with plural sets of the receiving means; and wherein: among the receiving signals amplified by the receiving signal amplifying means, the main body of the base station apparatus is so arranged as to process the receiving signal amplified by the same receiving signal amplifying unit by the same receiving unit.

With employment of such an arrangement, when a failure happens to occur in one of arbitrary receiving signal amplifying units, another receiving signal amplifying means is located in such a unit operable under normal condition within the diversity receiving system of the same sector. Furthermore, when a failure happens to occur in one of arbitrary receiving units, another receiving means is located in such a unit operable under normal condition within the diversity receiving system of the same sector.

Also, a wireless communication base station, according to the present invention, is featured by that in such a wireless communication base station for performing a wireless communication, while the own wireless cell is subdivided into at least four sectors, the receiving signal amplifying means provided in the receiving signal amplifying unit is so arranged as to amplify receiving signals received by antennas of sectors different from each other, which are not located adjacent to each other, and also the receiving means provided in the receiving unit is so arranged as to process the receiving signals received by the antennas of the sectors different from each other, which are not located adjacent to each other.

With employment of such an arrangement, when a failure happens to occur in one of arbitrary receiving signal amplifying units, another receiving signal amplifying means is located in such a unit operable under normal condition within the diversity receiving system of the same sector. Also, in the case that a failure happens to occur in one of arbitrary receiving units, another receiving means is located in such a unit operable under normal condition within the diversity receiving system of the same sector, and the diversity functions are also operable under normal condition in the adjoining sectors.

Also, a wireless communication base station, according to the present invention, is featured by that the wireless communication base station is such an apparatus for performing a wireless communication by way of the code-division multiplexing system; and the wireless base station is comprised of a signal processing unit for performing a diversity process among the sectors of the receiving signals received from the sectors different from each other. With employment of such an arrangement, the same signals can be diversity-received in the plural sectors in addition to the above-explained operations.

Also, a wireless communication base station, according to the present invention, is featured by further comprising: transmission means for transmitting a transmission signal every sector; and commonly-using means for commonly using the antenna in transmission/receiving modes; wherein: the antenna owns such an antenna used to transmit the transmission signal, and also such an antenna for transmitting/receiving the signal by the commonly-using means. With employment of such an arrangement, the antenna can be commonly used in both the transmission/receiving operations in addition to the above-described operations.

Also, a wireless communication base station, according to the present invention, is featured by that such a wireless communication base station for performing wireless communication, while the own wireless cell is subdivided into a plurality of sectors, comprising: a plurality of antennas installed in order that the plural sectors execute antenna diversity transmissions with respect to each of the sectors; a plurality of transmission means for outputting transmission signals transmitted by the antennas; and the same transmission units provided with plural sets of the transmission means for outputting signals transmitted by antennas of sectors different from each other among the transmission means; wherein: signals transmitted from antennas of the same sector are outputted from transmission units different from each other. In other words, with employment of such an arrangement, when a failure happens to occur in one of arbitrary transmission units, another transmission means is located in such a unit operable under normal condition within the diversity transmission system of the same sector.

Also, a wireless communication base station, according to the present invention is featured by that in such a wireless communication base station for performing a wireless communication, while the own wireless cell is subdivided into at least four sectors, the transmission means provided in the transmission unit is so arranged as to transmit transmission signals from antennas of the sectors different from each other, which are not located adjacent to each other.

With employment of such an arrangement, when a failure happens to occur in one of arbitrary transmission units, another transmission means corresponds to such a unit operable under normal condition within the diversity transmission system of the same sector. Also, the diversity functions are also operable under normal condition in the adjoining sectors. Also, a wireless communication base station, according to the present invention, is featured by that a wireless terminal apparatus having a signal processing unit performs a wireless communication by the code-division multiplexing system; and the signal processing unit of the wireless terminal apparatus performs a diversity receiving process operation of the transmission signals transmitted from the antennas different from each other, which are employed in the wireless communication base station.

With employment of such an arrangement, even when a failure happens to occur in one of arbitrary units, the wireless terminal apparatus can receive the signals which are transmitted from a large number of antennas of the base stations.

Also, a wireless communication base station, according to the present invention, is featured by such a wireless communication base station for performing wireless communication, while the own wireless cell is subdivided into a plurality of sectors, comprising: a plurality of antennas installed in order that the plural sectors execute antenna diversity receiving with respect to each of the sectors; commonly-using means for commonly using the antennas in both transmission and receiving operations; a plurality of receiving means for processing receiving signals received by the antennas; and a plurality of transmission means for outputting transmission signals transmitted from the antennas; wherein: a plurality of receiving means for processing signals received by antennas of different sectors among the plural receiving means are employed in the same receiving unit; the signals received by antennas of the same sector are received/processed by different receiving units from each other; a plurality of transmission means for outputting signals transmitted from antennas of different sectors among the plural transmission means are employed in the same transmission unit; and the signals transmitted from antennas of the same sector are outputted from the different transmission unit.

With employment of such an arrangement, when a failure happens to occur in one of arbitrary receiving units, or one of arbitrary transmission units, either another receiving means or another transmission means is located in such a unit operable under normal condition within either the diversity receiving system or the diversity transmission system of the same sector.

Also, a wireless communication base station, according to the present invention, is featured by that in such a wireless communication base station for performing a wireless communication, while the own wireless cell is subdivided into at least four sectors, the transmission means provided in the transmission unit is so arranged as to transmit transmission signals from antennas of sectors different from each other, which are not located adjacent to each other; and the receiving means provided in the receiving unit is so arranged as to process receiving signals received by antennas of sectors different from each other, which are not located adjacent to each other.

With employment of such an arrangement, when a failure happens to occur in one of arbitrary receiving units, or one of arbitrary transmission units, either another receiving means or another transmission means is located in such a unit operable under normal condition within either the diversity receiving system or the diversity transmission system of the same sector. Also, the diversity functions are also operable under normal condition in the adjoining sectors.

Also, a wireless communication base station, according to the present invention, is featured by comprising: a main body of a base station apparatus having both a receiving unit and a transmission unit; receiving signal amplifying means for amplifying receiving signals received by antennas; a coaxial cable for transmitting the receiving signals between the receiving signal amplifying means and the main body of the base station apparatus; a plurality of commonly-using means for commonly using the antennas in transmission/receiving modes; and the same receiving signal amplifying unit provided with plural sets of the receiving signal amplifying means, and plural sets of the commonly-using means, which are connected to antennas of sectors different from each other, among said receiving signal amplifying means and said commonly-using means.

With employment of such an arrangement, when a failure happens to occur in one of arbitrary receiving signal amplifying units, another receiving signal amplifying means is operable under normal condition within the diversity receiving system of the same sector, while having the above-described operations.

Also, a wireless communication base station, according to the present invention, is featured by such a wireless communication base station for performing wireless communication, while the own wireless cell is subdivided into a plurality of sectors, comprising: a plurality of antennas installed in order that the plural sectors execute antenna diversity receiving with respect to each of the sectors; commonly-using means for commonly using the antennas in both transmission and receiving operations; a plurality of receiving means for processing receiving signals received by the antennas; a plurality of transmission means for outputting transmission signals transmitted from the antennas; and the same transmission/receiving unit provided with plural sets of the transmission means, and plural sets of the receiving means, which process/output signals received/transmitted by the antennas of the sectors different from each other, among both the receiving means and the transmission means, and the signals transmitted/received by the antennas of the same sector are received/transmitted by the different transmission /receiving unit.

With employment of such an arrangement, when a failure happens to occur in one of arbitrary transmission/receiving units, another receiving means, or another transmission means is located in such a unit operable under normal condition within the diversity receiving, or transmission system of the same sector.

Also, a wireless communication base station, according to the present invention, is featured by that in such a wireless communication base station for performing a wireless communication, while the own wireless cell is subdivided into at least four sectors, the transmission means provided in the transmission/receiving unit is so arranged as to transmit transmission signals from antennas of sectors different from each other, which are not located adjacent to each other; and the receiving means provided in the transmission/receiving unit is so arranged as to process receiving signals received from antennas of sectors different from each other, which are not located adjacent to each other.

With employment of such an arrangement, when a failure happens to occur in one of arbitrary transmission/receiving units, another receiving means and another transmission means is located in such units operable under normal condition within the diversity receiving system and the diversity transmission system of the same sector. Also, the diversity functions are also operable under normal condition in the adjoining sectors.

Also, a wireless communication base station, according to the present invention, is featured by that the commonly-using means is built in the transmission/receiving unit. With employment of such an arrangement, the antennas are commonly used in the transmission/receiving units, and the integration degree can be further increased, while having the above-described operations.

Also, a wireless communication base station, according to the present invention, is featured by that the wireless base station is comprised of a signal processing unit for performing a diversity process among the sectors of the receiving signals received from the sectors different from each other; and further, a wireless terminal apparatus having a signal processing unit performs a wireless communication by the code-division multiplexing system; and the signal processing unit of the wireless terminal apparatus performs a diversity receiving process operation of the transmission signals transmitted from the antennas different from each other, which are employed in the wireless communication base station.

With employment of such an arrangement, even when a failure happens to occur in one arbitrary receiving unit, as to the communications between the wireless terminal apparatus and the base station, the diversity process operations can be done for the signals which are transmitted/received from a large number of antennas.

It should be noted that the present invention may be applied to a wireless communication system equipped with each of the above-described wireless communication base stations according to the present invention. For example, when the present invention is applied to a wireless communication system, the following wireless communication system may be arranged. In a wireless communication system for performing a wireless communication, while a wireless cell corresponding to a range where one wireless communication base station performs a wireless communication is subdivided into a plurality of sectors, said wireless communication base station is comprised of: a plurality of antennas installed in order to execute antenna diversity receiving with respect to each of the sectors; receiving means for processing receiving signals received by the plurality of antennas; and a plurality of receiving units provided with plural sets of the receiving means; wherein:
the receiving means provided in the receiving unit is so arranged as to process receiving signals received by the antennas of the different sectors from each other. In other words, since the wireless communication system is arranged by the respective wireless communication base stations according to the above-explained present invention, such a wireless communication system capable of increasing the communication capacity and also capable of stabilizing the communication quality can be constructed.

### BRIEF DESCRIPTION OF THE DRAWINGS

Fig. 1 is a block diagram to show an arrangement of a wireless communication base station according to a first embodiment mode of the present invention.

Fig. 2 is a block diagram to show an arrangement of a wireless communication base station according to a second embodiment mode of the present invention.

Fig. 3 is a block diagram to show an arrangement of a wireless communication base station according to a third embodiment mode of the present invention.

Fig. 4 is a block diagram to show an arrangement of a wireless communication base station according to a fourth embodiment mode of the present invention.

Fig. 5 is a block diagram to show an arrangement of a wireless communication base station according to a fifth embodiment mode of the present invention.

Fig. 6 is a block diagram to show an arrangement of a wireless communication base station according to a sixth embodiment mode of the present invention.

Fig. 7 is a block diagram to show an arrangement of a wireless communication base station according to an eighth embodiment mode of the present invention.

Fig. 8 is a block diagram to show an arrangement of a wireless communication base station according to a ninth embodiment mode of the present invention.

Fig. 9 is a block diagram to show an arrangement of a wireless communication base station according to a tenth embodiment mode of the present invention.

Fig. 10 is a block diagram to show an arrangement of a wireless communication base station according to a twelfth embodiment mode of the present invention.

Fig. 11 is a block diagram to show an arrangement of a wireless communication base station according to a 13th embodiment mode of the present invention.

Fig. 12 is a block diagram for representing an arrangement of a wireless communication base station according to a 14th embodiment mode of the present invention.

Fig. 13 is a block diagram to show an arrangement of a wireless communication base station according to a 15th embodiment mode of the present invention.

Fig. 14 is a block diagram to show an arrangement of a wireless communication base station according to a 16th embodiment mode of the present invention.

Fig. 15 is a block diagram to show an arrangement of a wireless communication base station according to a 17th embodiment mode of the present invention.

Fig. 16 is a block diagram to show the arrangement of the receiving system of the conventional wireless communication base station.

Fig. 17 is a block diagram to show the arrangement of the receiving system of the conventional wireless communication base station equipped with the receiving signal amplifying means.

Fig. 18 is a schematic diagram to show the sector arrangement within the cell of the wireless communication base station.

Fig. 19 is a schematic diagram to show the directivity characteristic of the antenna of the first sector.

### DESCRIPTION OF THE PREFERRED EMBODIMENTS

Referring now to drawings, various embodiment modes of the present invention will be described in detail.

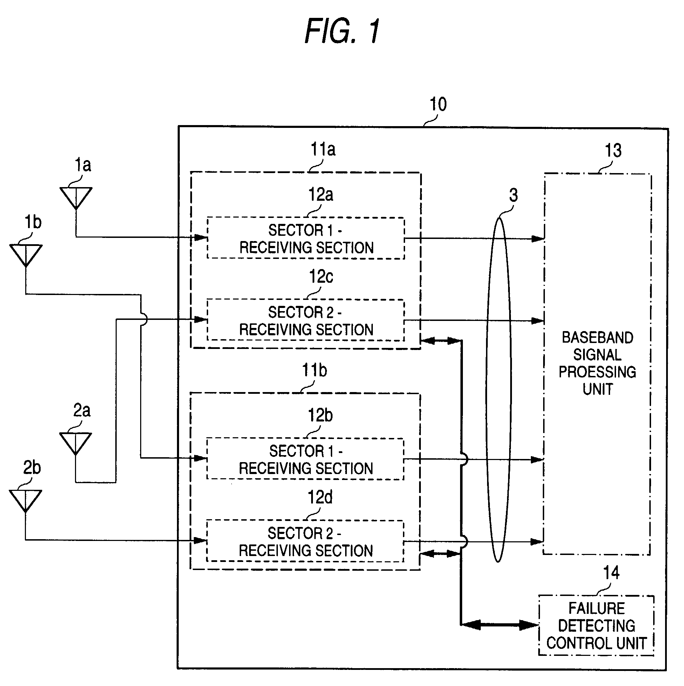

Fig. 1 is a structural diagram to show a wireless communication base station according to a first embodiment mode of the present invention. As a consequence, the first embodiment mode of the present invention will now be explained with reference to Fig. 1. In this drawing, the wireless communication base station corresponds to such a base station that, for instance, while the own wireless cell is subdivided into two sectors, a diversity receiving is carried out by two sets of antennas in the respective sectors. In this case, the base station is arranged by antennas of 4 systems, namely, a first sector zeroth-system antenna 1a; a first sector first-system antenna 1b; a second sector zeroth-system antenna 2a; and a second sector first-system antenna 2b, and further a main body 10 of a base station apparatus.

The main body 10 of the base station apparatus is arranged by a receiving section 12a to a receiving section 12d of four systems; a first receiving unit 11a equipped with the receiving section 12a and the receiving section 12c; a second receiving unit 11b equipped with the receiving section 12b and the receiving section 12d, a baseband signal processing unit 13; and a failure sensing/controlling unit 14. The receiving sections 12a to 12d of the four systems correspond to receiving means for converting signals received by the respective antennas into baseband signals 3. The baseband signal processing unit 13 executes a signal process operation such as the diversity signal process operation by which the receiving baseband signals 3 outputted from the respective receiving sections 12a to 12d are synthesized with each other by way of, for example, a maximum synthesizing ratio. The failure sensing/controlling unit 14 senses failures occurred in the first receiving unit lla and the second receiving unit 11b to perform various control operations. For instance, an alarm signal is produced, and/or a supply of electric power is interrupted.

The receiving section 12a corresponds to such a receiving means for performing, for example, a receiving process operation by which the signal received by the first sector zeroth-system antenna 1a is converted into the receiving baseband signal 3. The receiving section 12b corresponds to such a receiving means for performing, for example, a receiving process operation by which the signal received by the first sector first-system antenna 1b is converted into the receiving baseband signal 3. The receiving section 12c corresponds to such a receiving means for performing, for example, a receiving process operation by which the signal received by the second sector zeroth-system antenna 2a is converted into the receiving baseband signal 3. The receiving section 12d corresponds to such a receiving means for performing, for example, a receiving process operation by which the signal received by the second sector first-system antenna 2b is converted into the receiving baseband signal 3. Each of these receiving sections 12a, 12b, 12c, and 12d is arranged by an amplifier, a frequency mixer, a local oscillator, a band limiting filter, and the like.

It should be understood in the drawings used to explain the below-mentioned respective embodiment modes of the present invention that each of the receiving sections are indicated by employing sector numbers and, if necessary, system numbers for the sake of easy understandings. For instance, the receiving section 12a is indicated as a "sector-1 receiving section", or a "sector-1 receiving section zeroth-system."

Next, a description will now be made of operations of the wireless communication base station with employment of the above-explained arrangement. In the above-described arrangement, for example, when a failure happens to occur in the first receiving unit 11a, the failure sensing/controlling unit 14 senses the occurrence of this failure, and then performs the following control operations. That is, the power supply of the first receiving unit 11a is stopped, and an alarm signal is produced, for example, a light emission of an LED which can be recognized by a maintenance monitoring operator.

At this time, the baseband signal processing unit 13 performs such a signal process operation as to only the receiving baseband signals 3 outputted from the receiving sections 12b and 12d provided in the second receiving unit 11b. In other words, in the case that a failure happens to occur in the first receiving unit 11a, or the first receiving unit 11a is being replaced, the main body 10 of the base station apparatus can execute the receiving process operation of the signals received by both the first sector first-system antenna 1b and the second sector first-system antenna 2b.

As previously described, in accordance with the wireless communication base station of the first embodiment mode of the present invention, in such a case that a failure happens to occur in one of arbitrary receiving units while a plurality of receiving means are arranged within a single receiving unit, another receiving means of the diversity receiving system of the same sector is so arranged as to be such a unit operable under normal condition. As a result, even when the failure occurs in one of the arbitrary receiving units, the receiving functions of the respective sectors can be operated, or are operable as a single branch, although the diversity gain is lowered. As a consequence, the base station apparatus can be made compact, while the communication area and the communication capacity are not largely lowered.

Also, since the base station apparatus is not equipped with the auxiliary system and also the switching unit for this auxiliary system and the operation system, the base station apparatus can be made compact while maintaining the communication quality in a high grade.

It should also be noted that when more than 3 sectors are employed, or more than 3 diversity systems are employed, if a similar arrangement to the above-explained arrangement is used, then a similar effect to the above-described effect may be achieved.

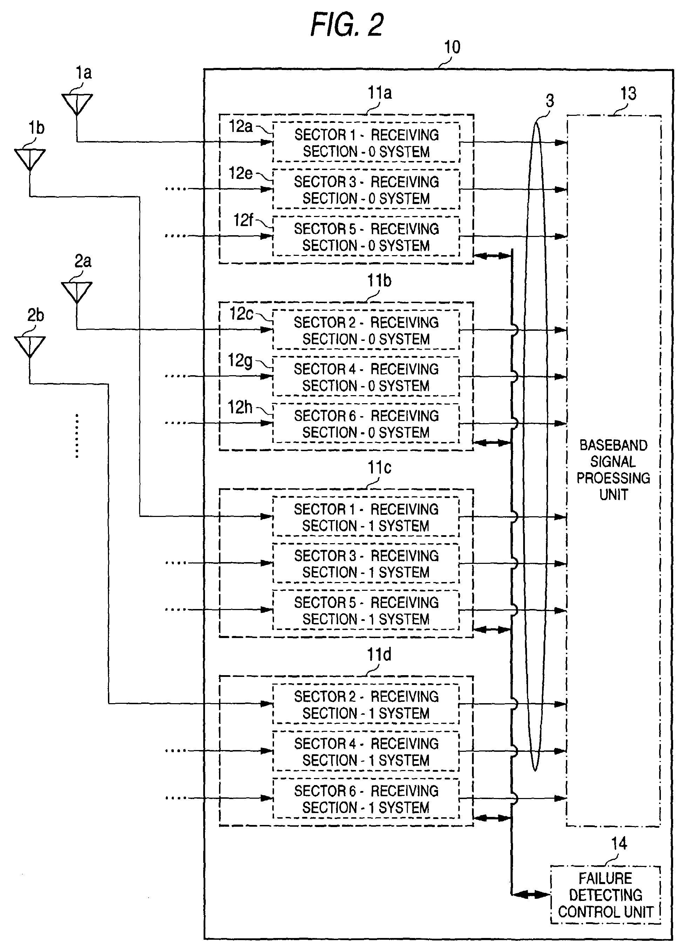

Next, a description will now be made of a second embodiment mode of the present invention. Fig. 2 is a structural diagram to show a wireless communication base station according to the second embodiment mode of the present invention. In this drawing, the wireless communication base station corresponds to such a base station that the own wireless cell is subdivided into, for example, 6 sectors, a diversity receiving is carried out by using two sets of antennas in each of these sectors. The wireless communication base station is arranged by 12 systems of antennas in total, and a main body 10 of a base station apparatus. The 12 systems of antennas are constituted by two systems of each of the six sectors, namely a first sector zeroth-system antenna 1a; a first sector first-system antenna 1b; a second sector zeroth-system antenna 2a; a second sector first-system antenna 2b and so on.

The main body 10 of the base station apparatus is arranged by 4 sets of first receiving unit 11a to fourth receiving unit lid; a baseband signal processing unit 13; and a failure sensing/controlling unit 14. The first to fourth receiving units 11a to 11d are equipped with receiving means for converting the signals received by the respective antennas to, for instance, receiving baseband signals 3.

The first receiving unit 11a is provided with a receiving section 12a, a receiving section 12e, and a receiving section 12f. The receiving unit 12a converts the signal received by the first sector zeroth-system antenna 1a into the receiving baseband signal 3. The receiving section 12e converts the signal received by the third sector zeroth-system antenna into the receiving baseband signal 3. The receiving section 12f converts the signal received by the fifth sector zeroth-system antenna into the receiving baseband signal 3. The second receiving section 11b is provided with a receiving section 12c, a receiving section 12g, and a receiving section 12h. The receiving section 12c converts the signal received by the second sector zeroth-system antenna 2a into the receiving baseband signal 3. The receiving section 12g converts the signal received by the fourth sector zeroth-system antenna into the receiving baseband signal 3. The receiving section 12h converts the signal received by the fifth sector zeroth-system antenna into the receiving baseband signal 3.

Similarly, the third receiving unit 11c is provided with a receiving section for performing receiving process operations of the signals which are received by the antennas of the first systems of each of the first, third, and fifth sectors. Also, the fourth receiving unit 11d is provided with a receiving section for performing receiving process operations of the signals which are received by the antennas of the first systems of each of the second, fourth, and sixth sectors.

Next, operations of the wireless communication base station with employment of the above-described arrangement will now be described.

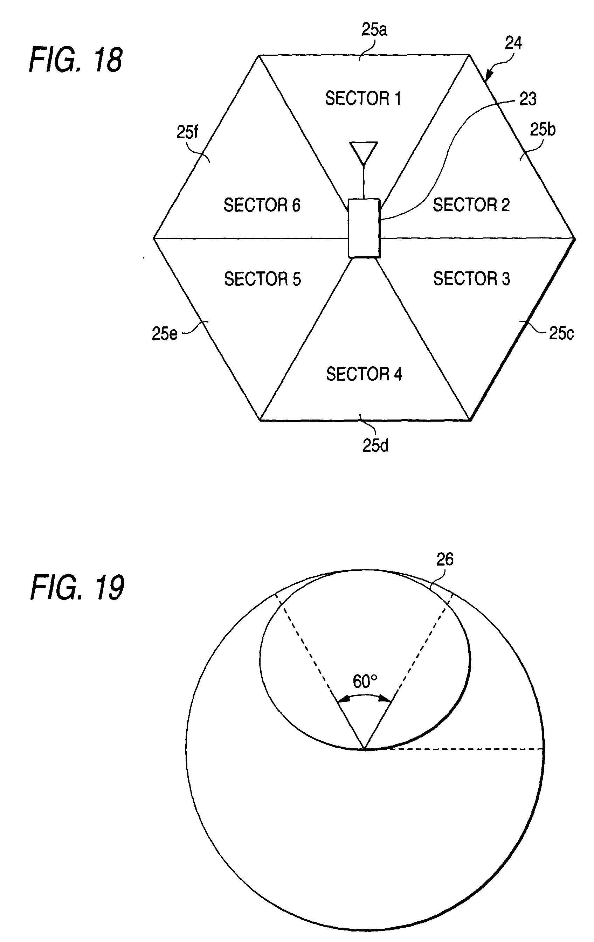

Fig. 18 schematically represents a positional relationship among sectors of a base station in which the own wireless cell is subdivided into 6 sectors. A range where a wireless base station 23 performs a wireless communication is defined within a wireless cell 24. To increase a capacity of a wireless communication per one base station, the wireless cell 24 is subdivided into 6 sectors defined from a first sector 25a to a sixth sector 25f. The wireless cell 24 is subdivided into 6 sectors in such a manner that antennas having directivity of at least 60 degrees are arranged around the wireless base station 23 as a center position every 60 degrees in this order from the first sector 25a via the second sector 25b, the third sector 25c, the fourth sector 25d, and the fifth sector 25e up to the sixth sector 25f.

In Fig. 19, there is shown an example of directivity 26 of an antenna of the first sector. As indicated in Fig. 19, generally speaking, directivity of an antenna used in the six sectors owns wider directivity than 60 degrees.

As a result, although the antenna gain is lowered by the antenna of the first sector 25a, the wireless communication can be carried out between this first sector 25a and either the second sector 25b or the sixth sector 25f.

In the arrangement of the second embodiment mode shown in Fig. 2, for example, when a failure happens to occur in the first receiving unit 11a, the failure sensing/controlling unit 14 senses the occurrence of this failure, and then performs the following control operations. That is, the power supply of the first receiving unit 11a is stopped, and an alarm signal is produced, for example, a light emission of an LED which can be recognized by a maintenance monitoring operator.

At this time, the baseband signal processing unit 13 performs such a signal process operation as to the receiving baseband signals 3 outputted from each of the receiving sections provided in the second receiving unit 11b, the third receiving unit 11c, and the fourth receiving unit 11d.

In other words, since the first receiving unit 11a fails, the signals cannot be received by the respective zeroth-system antennas provided in the first sector 25a, the third sector 25c, and the fifth sector 25e. However, the signals can be received by the respective first-system antennas provided in the third receiving unit 11c operated under normal condition.

Also, in the first sector 25a, the third sector 25c, and the fifth sector 25e, since the diversity gain is lowered, either the communication area of this sector becomes narrow or the quality of the wireless communication is deteriorated. However, the diversity receiving may satisfactorily function in the second sector 25b, the fourth sector 25d, and the sixth sector 25f, which are located adjacent to the above-described first, third, and fifth sectors 25a, 25c, and 25e. For instance, a wireless terminal which is communicated with the base station in the first sector 25a is smoothly handed over the above-explained adjoining second sector 25b whose communication condition becomes better, so that the wireless communication can be sufficiently maintained.

As previously described, in accordance with the wireless communication base station of the second embodiment mode of the present invention, in such a case that a failure happens to occur in one of arbitrary receiving units while a plurality of receiving means are arranged within a single receiving unit, another receiving means of the diversity receiving system of the same sector is so arranged as to be such a unit operable under normal condition. Also, the adjoining sectors are located in such a unit that the diversity function is operable under normal condition. As a result, even when the failure occurs in one of the arbitrary receiving units, the receiving functions of the respective sectors can be operated as a single branch, although the diversity gain is lowered. Furthermore, the receiving functions of the respective sectors can be smoothly handed over the adjoining sectors thereof where the diversity receiving functions are operated under normal condition. As a consequence, the base station apparatus can be made compact, while the communication area and the communication capacity are not largely lowered.

It should be understood that in this second embodiment mode, such an arrangement having two systems of the diversity receiving in the six sectors has been explained. In such a case that more than four sectors are employed and more than two diversity systems are employed, if a similar arrangement to the above-explained arrangement is employed, then a similar effect to the above-described effect may be achieved.

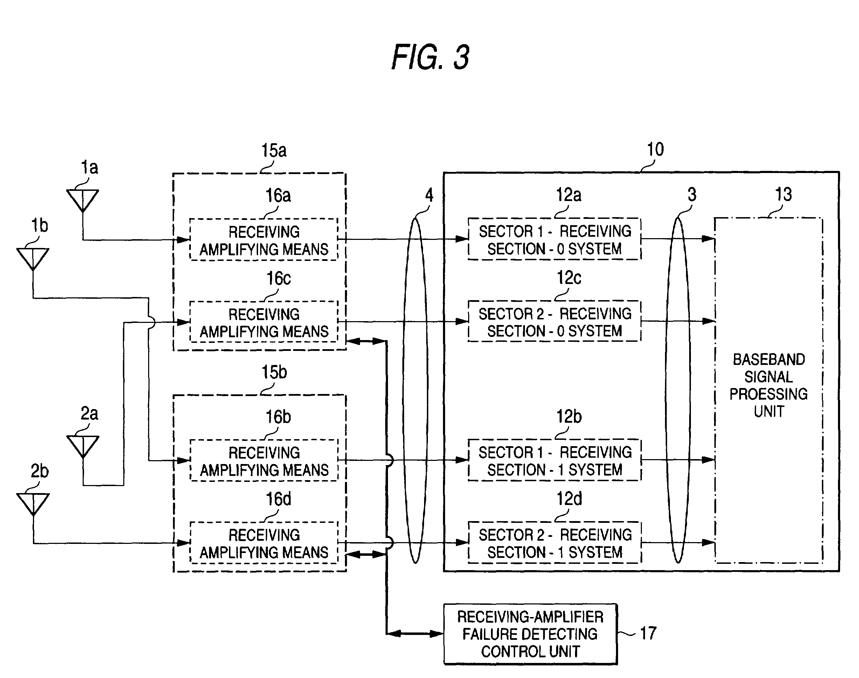

Next, a description will now be made of a third embodiment mode of the present invention. Fig. 3 is a structural diagram for representing a wireless communication base station according to a third embodiment mode of the present invention. In this drawing, the wireless communication base station corresponds to such a base station that, for instance, while the own wireless cell is subdivided into two sectors, a diversity receiving is carried out by two sets of antennas in the respective sectors. In this case, the base station is arranged by antennas of 4 systems, namely, a first sector zeroth-system antenna 1a; a first sector first-system antenna 1b; a second sector zeroth-system antenna 2a; and a second sector first-system antenna 2b, and also a main body 10 of a base station apparatus. This base station is further arranged by a first receiving signal amplifying unit 15a; a second receiving signal amplifying unit 15b; a coaxial cable 4 used to transfer a receiving signal among the first receiving signal amplifying unit 15a; the second receiving signal amplifying unit 15b, and the main body of the base station; and a receiving signal amplifying unit failure sensing/controlling unit 17 for sensing failures occurred in the first and second receiving signal amplifying units 15a and 15b, and performs a control operation, for example, a production of an alarm signal, and an interruption of a power supply.

The first receiving signal amplifying unit 15a is equipped with receiving signal amplifying means 16a and 16c, whereas the second receiving signal amplifying unit 15b is equipped with receiving signal amplifying means 16b and 16d. The main body 10 of the base station apparatus is arranged by a receiving section 12a to a receiving section 12d of four systems; and also a baseband signal processing unit 13. The receiving sections 12a to 12d of the four systems correspond to receiving means for converting signals amplified by the respective receiving signal amplifying means 16a to 16d into baseband signals 3.

The receiving signal amplifying means 16a corresponds to such a receiving signal amplifying means for amplifying the signal received by the first sector zeroth-system antenna 1a by, for example, low noise, which is constituted by a low noise amplifier and the like. The receiving signal amplifying means 16b corresponds to such a receiving signal amplifying means for amplifying the signal received by the first sector first-system antenna 1b by, for example, low noise, which is constituted by a low noise amplifier and the like. The receiving signal amplifying means 16c corresponds to such a receiving signal amplifying means for amplifying the signal received by the second sector zeroth-system antenna 2a by, for example, low noise, which is constituted by a low noise amplifier and the like. The receiving signal amplifying means 16d corresponds to such a receiving signal amplifying means for amplifying the signal received by the second sector first-system antenna 2b by, for example, low noise, which is constituted by a low noise amplifier and the like.

Next, a description will now be made of operations of the wireless communication base station with employment of the above-explained arrangement. In the above-described arrangement, for example, when a failure happens to occur in the first receiving signal amplifying unit 15a, the receiving signal amplifying unit failure sensing/controlling unit 17 senses the occurrence of this failure, and then performs the following control operations. That is, the power supply of the first receiving signal amplifying unit 15a is stopped, and an alarm signal is produced, for example, a light emission of an LED which can be recognized by a maintenance monitoring operator.

At this time, the main body 10 of the base station apparatus performs such a signal process operation as to only the receiving signals outputted from the receiving signal amplifying means 16b and 16d provided in the second receiving signal amplifying unit 15b.

In other words, in the case that a failure happens to occur in the first receiving signal amplifying unit 15a, or the first receiving signal amplifying unit 15a is being replaced, the main body 10 of the base station apparatus can execute the receiving process operation of the signals received by both the first sector first-system antenna 1b and the second sector first-system antenna 2b.

That is to say, in accordance with the wireless communication base station of the third embodiment mode of the present invention, in such a case that a failure happens to occur in one of arbitrary receiving signal amplifying units while a plurality of receiving signal amplifying means are arranged within a single receiving signal amplifying unit, another receiving signal amplifying means of the diversity receiving system of the same sector is so arranged as to be such a unit operable under normal condition. As a result, even when the failure occurs in one of the arbitrary receiving signal amplifying units, the receiving functions of the respective sectors can be operated, or are operable as a single branch, although the diversity gain is lowered. As a consequence, the base station apparatus can be made compact, while the communication area and the communication capacity are not largely lowered.

Also, since the base station apparatus is not equipped with the auxiliary system and also the switching unit for this auxiliary system and the operation system, the base station apparatus can be made compact while maintaining the communication quality in a high grade.

It should also be noted that when more than 3 sectors are employed, or more than 3 diversity systems are employed, if a similar arrangement to the above-explained arrangement is used, then a similar effect to the above-described effect may be achieved.

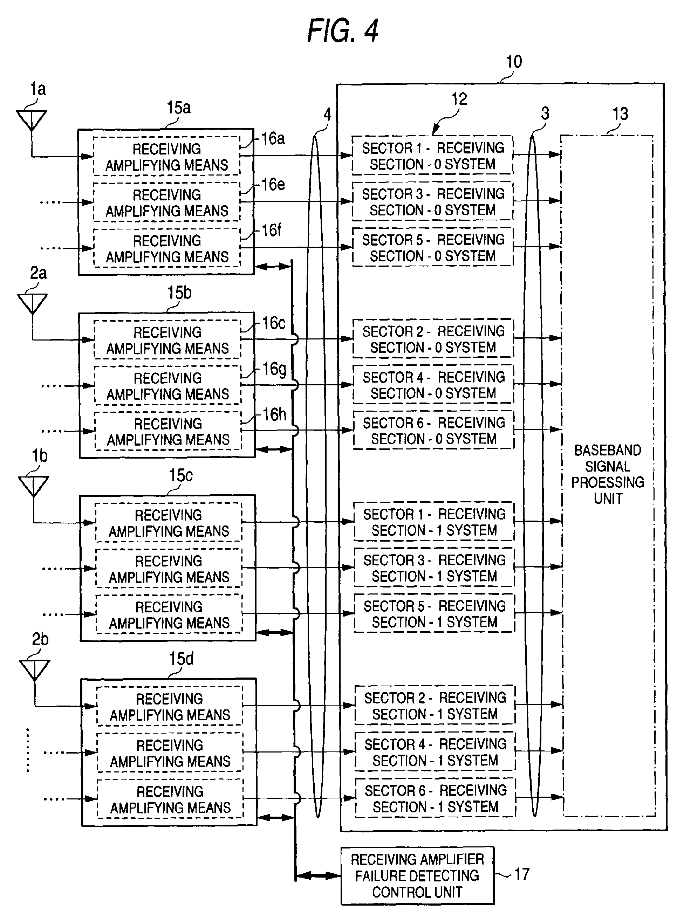

Next, a description will now be made of a fourth embodiment mode of the present invention. Fig. 4 is a structural diagram to show a wireless communication base station according to the fourth embodiment mode of the present invention. In this drawing, the wireless communication base station corresponds to such a base station that the own wireless cell is subdivided into, for example, 6 sectors, a diversity receiving is carried out by using two sets of antennas in each of these sectors.

The wireless communication base station of the fourth embodiment mode is constituted by 12 systems (in total) of antennas for each two systems of six (in total) sectors; a main body 10 of a base station apparatus; a first receiving signal amplifying unit 15a; a second receiving signal amplifying unit 15b; a third receiving signal amplifying unit 15c; a fourth receiving signal amplifying unit 15d; a coaxial cable 4 used to transfer a receiving signal among the first to fourth receiving signal amplifying units 15a to 15d, and also the main body 10 of the base station apparatus; and further, a receiving signal amplifying unit failure sensing/controlling unit 17.

The main body 10 of the base station apparatus is arranged by 12 systems of receiving sections 12 and a baseband signal processing unit 13. The receiving sections 12 correspond to such receiving means for converting signals amplified by the first to fourth receiving signal amplifying units 15a to 15d into, for example, receiving baseband signals 3.

The first receiving signal amplifying unit 15a is provided with a receiving signal amplifying means 16a, a receiving signal amplifying means 16e, and a receiving signal amplifying means 16f. The receiving signal amplifying means 16a amplifies the signal received by the first sector zeroth-system antenna 1a. The receiving signal amplifying means 16e amplifies the signal received by the third sector zeroth-system antenna. Also, the receiving signal amplifying means 16f amplifies the signal received by the fifth sector zeroth-system antenna.

The second receiving signal amplifying unit 15b is provided with a receiving signal amplifying means 16c, a receiving signal amplifying means 16g, and a receiving signal amplifying means 16h. The receiving signal amplifying means 16c amplifies the signal received by the second sector zeroth-system antenna 2a. The receiving signal amplifying means 16g amplifies the signal received by the fourth sector zeroth-system antenna. Also, the receiving signal amplifying means 16h amplifies the signal received by the sixth sector zeroth-system antenna.

Similarly, the third receiving signal amplifying unit 15c is equipped with a receiving signal amplifying means for amplifying the signals received by the antennas of the first systems for each of the first, third, and fifth sectors. The fourth receiving signal amplifying unit 15c is equipped with a receiving signal amplifying means for amplifying the signals received by the antennas of the first systems for each of the second, fourth, and sixth sectors.

Next, a description will now be made of operations of the wireless communication base station with employment of the above-explained arrangement. In the above-described arrangement, for example, when a failure happens to occur in the first receiving signal amplifying unit 15a, the receiving signal amplifying unit failure sensing/controlling unit 17 senses the occurrence of this failure, and then performs the following control operations. That is, the power supply of the first receiving signal amplifying unit 15a is stopped, and an alarm signal is produced, for example, a light emission of an LED which can be recognized by a maintenance monitoring operator.

At this time, the main body 10 of the base station apparatus performs such a signal process operation as to only the receiving signals outputted from the receiving signal amplifying means employed in the second, third, and fourth receiving signal amplifying sections 15b, 15c, and 15d. In other words, in the case that a failure happens to occur in the first receiving signal amplifying unit 15a, or the first receiving unit 15a is being replaced, the main body 10 of the base station apparatus can execute the receiving process operation of the signals received by the first-system antennas of the first, third, and fifth sectors, respectively, and also the signals received by the second-system antennas among the signals received by the first-system antennas of the second, fourth, and sixth sectors, respectively.

As previously described, in accordance with the wireless communication base station of the fourth embodiment mode of the present invention, in such a case that a failure happens to occur in one of arbitrary receiving signal amplifying units while a plurality of receiving signal amplifying means are arranged within a single receiving signal amplifying unit, another receiving signal amplifying means of the diversity receiving system of the same sector is so arranged as to be such a unit operable under normal condition. Also, the adjoining sectors are located in such a unit that the diversity function is operable under normal condition. As a result, even when the failure occurs in one of the arbitrary receiving signal amplifying units, the receiving functions of the respective sectors can be operated as a single branch, although the diversity gain is lowered. Furthermore, the receiving functions of the respective sectors can be smoothly handed over the adjoining sectors thereof where the diversity receiving functions are operated under normal condition. As a consequence, the base station apparatus can be made compact, while the communication area and the communication capacity are not largely lowered.

It should be understood that in this second embodiment mode, such an arrangement having two systems of the diversity receiving in the six sectors has been explained. In such a case that more than four sectors are employed and more than two diversity systems are employed, if a similar arrangement to the above-explained arrangement is employed, then a similar effect to the above-described effect may be achieved.

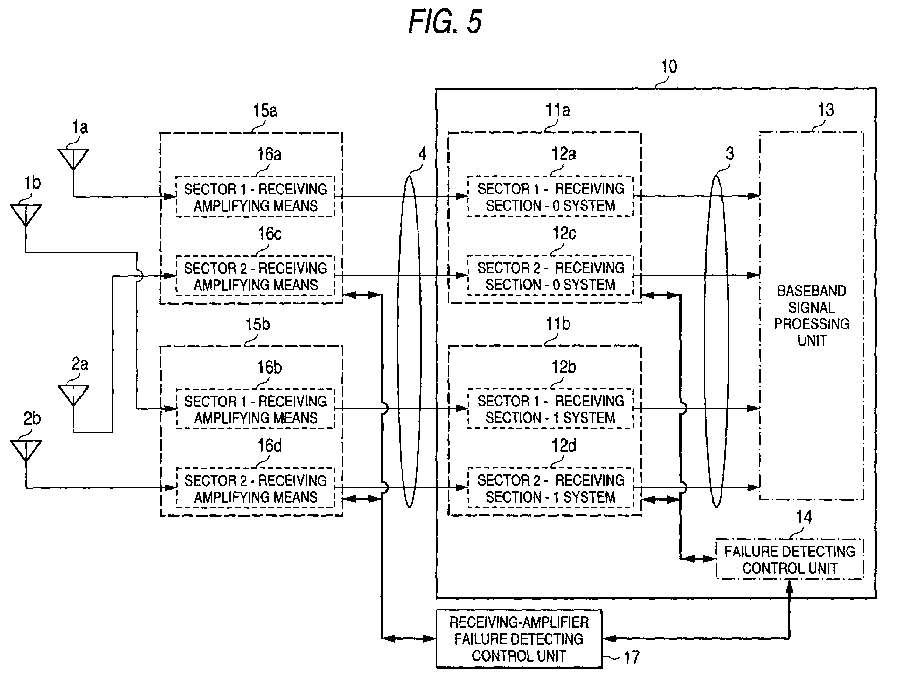

Next, a description will now be made of a fifth embodiment mode of the present invention. Fig. 5 is a structural diagram for representing a communication base station according to a fifth embodiment mode of the present invention. In this drawing, the wireless communication base station corresponds to such a base station that, for instance, while the own wireless cell is subdivided into two sectors, a diversity receiving is carried out by two sets of antennas in the respective sectors. In this case, the base station is arranged by antennas of 4 systems, namely, a first sector zeroth-system antenna 1a; a first sector first-system antenna 1b; a second sector zeroth-system antenna 2a; and a second sector first-system antenna 2b, and also a main body 10 of a base station apparatus. This base station is further arranged by a first receiving signal amplifying unit 15a; a second receiving signal amplifying unit 15b; a coaxial cable 4 used to transfer a receiving signal among the first receiving signal amplifying unit 15a, the second receiving signal amplifying unit 15b, and the main body 10 of the base station; and a receiving signal amplifying unit failure sensing/controlling unit 17 for sensing failures occurred in the first and second receiving signal amplifying units 15a and 15b, and performs a control operation, for example, a production of an alarm signal, and an interruption of a power supply.

The first receiving signal amplifying unit 15a is equipped with receiving signal amplifying means 16a and 16c, whereas the second receiving signal amplifying unit 15b is equipped with receiving signal amplifying means 16b and 16d. The main body 10 of the base station apparatus is arranged by a receiving section 12a to a receiving section 12d of four systems; a first receiving unit 11a equipped with the receiving section 12a and the receiving section 12c; a second receiving unit 11b equipped with the receiving section 12b and the receiving section 12d; and also a baseband signal processing unit 13; and further, a failure sensing/controlling unit 14 for sensing occurrences of failures in the first and second receiving units 11a and 11b, and performs a control operation, namely a production of an alarm signal, and an interruption of a power supply. The receiving sections 12a to 12d of the four systems correspond to receiving means for converting signals amplified by the respective receiving signal amplifying means 16a to 16d into baseband signals 3.

The receiving signal amplifying means 16a corresponds to such a receiving signal amplifying means for amplifying the signal received by the first sector zeroth-system antenna 1a by, for example, low noise. The receiving signal amplifying means 16b corresponds to such a receiving signal amplifying means for amplifying the signal received by the first sector first-system antenna 1b by, for example, low noise. The receiving signal amplifying means 16c corresponds to such a receiving signal amplifying means for amplifying the signal received by the second sector zeroth-system antenna 2a by, for example, low noise. The receiving signal amplifying means 16d corresponds to such a receiving signal amplifying means for amplifying the signal received by the second sector first-system antenna 2b by, for example, low noise.

Next, a description will now be made of operations of the wireless communication base station with employment of the above-explained arrangement. In the above-described arrangement, for example, when a failure happens to occur in the first receiving signal amplifying unit 15a, the receiving signal amplifying unit failure sensing/controlling unit 17 senses the occurrence of this failure, and then performs the following control operations. That is, the power supply of the first receiving signal amplifying unit 15a is stopped, and an alarm signal is produced, for example, a light emission of an LED which can be recognized by a maintenance monitoring operator. At this time, the second receiving unit 11b employed in the main body 10 of the base station apparatus performs such a signal converting operation as to the receiving signals outputted from the receiving signal amplifying means 16b and 16d provided in the second receiving signal amplifying unit 15b into the baseband signals 3.

Also, the receiving signal amplifying unit failure sensing/controlling unit 17 notifies the failure of the first receiving signal amplifying unit 15a with respect to the failure sensing/controlling unit 14. Based upon this notified result, the failure sensing/controlling unit 14 executes such a process operation that the power supply of the first receiving unit 11a is stopped.

In other words, in the case that a failure happens to occur in the first receiving signal amplifying unit 15a, or the first receiving signal amplifying unit 15a is being replaced, the main body 10 of the base station apparatus can execute the receiving process operation of the signals received by both the first sector first-system antenna 1b and the second sector first-system antenna 2b. Furthermore, the main body 10 of the base station apparatus can stop the power supply of the first receiving unit 11a every unit, in which the receiving signal is not transferred.

In the above-described arrangement, for example, when a failure happens to occur in the first receiving unit 11a, the failure sensing/controlling unit 14 senses the occurrence of this failure, and then performs the following control operations. That is, the power supply of the first receiving unit 11a is stopped, and an alarm signal is produced, for example, a light emission of an LED which can be recognized by a maintenance monitoring operator.

At this time, the second receiving unit 11b employed in the main body 10 of the base station apparatus performs such a signal process operation as to only the receiving signals outputted from the receiving signal amplifying means 16b and 16d provided in the second receiving signal amplifying unit 15b.

Also, the failure sensing/controlling unit 14 notifies the failure of the first receiving unit 11a with respect to the receiving signal amplifying unit failure sensing/controlling unit 17. Based upon this notified result, the receiving signal amplifying unit failure sensing/controlling unit 17 executes such a process operation that the power supply of the first receiving signal amplifying unit 15a is stopped.

In other words, in the case that a failure happens to occur in the first receiving unit 11a, or the first receiving unit 11a is being replaced, the main body 10 of the base station apparatus can execute the receiving process operation of the signals received by both the first sector first-system antenna 1b and the second sector first-system antenna 2b. Furthermore, the main body 10 of the base station apparatus can stop the power supply of the receiving signal amplifying unit 15a every unit, in which even when the receiving signal is amplified, this amplified receiving signal is not processed.

That is to say, in accordance with the wireless communication base station of the fifth embodiment mode of the present invention, in such a case that a failure happens to occur in one of arbitrary receiving signal amplifying units, or one of arbitrary receiving unit while a plurality of receiving signal amplifying means are arranged within a single receiving signal amplifying unit, another receiving signal amplifying means, or another receiving means of the diversity receiving system of the same sector is so arranged as to be such a unit operable under normal condition. As a result, even when the failure occurs in one of the arbitrary receiving signal amplifying units, or one of the arbitrary receiving units, the receiving functions of the respective sectors can be operated, or are operable as a single branch, although the diversity gain is lowered. As a consequence, the base station apparatus can be made compact, while the communication area and the communication capacity are not largely lowered. The wireless communication base station can simply reduce unnecessary power consumption, as compared with that of the third embodiment mode of the present invention.

Also, since the base station apparatus is not equipped with the auxiliary system and also the switching unit for this auxiliary system and the operation system, the base station apparatus can be made compact while maintaining the communication quality in a high grade.

It should also be noted that when more than 3 sectors are employed, or more than 3 diversity systems are employed, if a similar arrangement to the above-explained arrangement is used, then a similar effect to the above-described effect may be achieved.

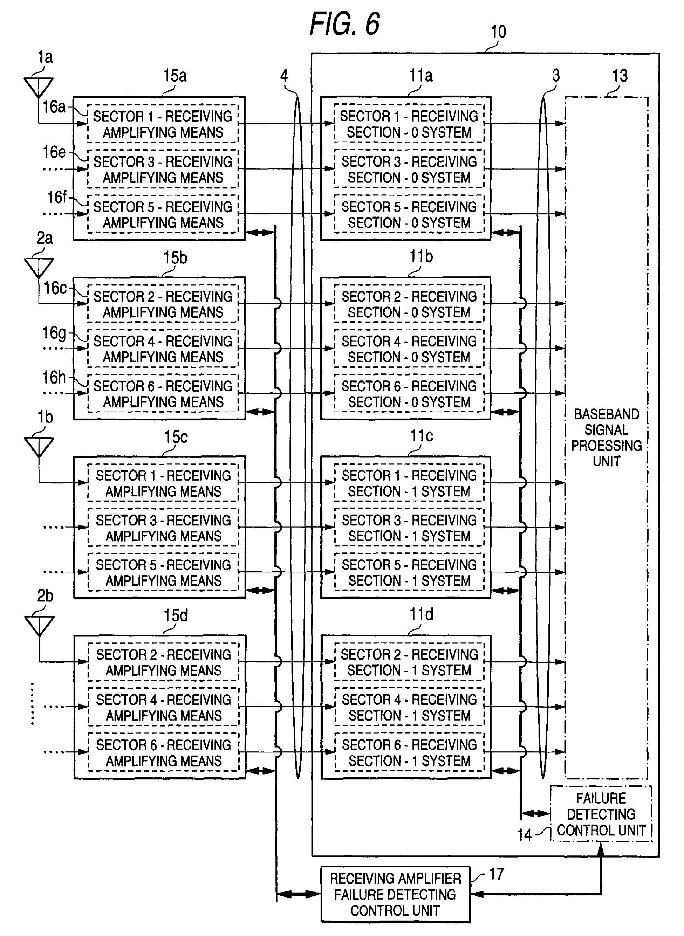

Next, a description will now be made of a sixth embodiment mode of the present invention. Fig. 6 is a structural diagram to show a wireless communication base station according to the sixth embodiment mode of the present invention. In this drawing, the wireless communication base station corresponds to such a base station that the own wireless cell is subdivided into, for example, 6 sectors, a diversity receiving is carried out by using two sets of antennas in each of these sectors. The wireless communication base station of the fourth embodiment mode is constituted by 12 systems (in total) of antennas for each two systems of six (in total) sectors; a main body 10 of a base station apparatus; a first receiving signal amplifying unit 15a; a second receiving signal amplifying unit 15b; a third receiving signal amplifying unit 15c; a fourth receiving signal amplifying unit 15d; a coaxial cable 4 used to transfer a receiving signal among the first to fourth receiving signal amplifying units 15a to 15d, and also the main body 10 of the base station apparatus; and further, a receiving signal amplifying unit failure sensing/controlling unit 17.

The main body 10 of the base station apparatus is arranged by 4 sets of first to fourth receiving units 11a to 11d equipped with receiving means for converting signals received by the respective antennas into, for example, receiving baseband signals 3; a baseband signal processing unit 13; and a failure sensing/controlling unit 14. The first receiving signal amplifying unit 15a is provided with a receiving signal amplifying means 16a, a receiving signal amplifying means 16e, and a receiving signal amplifying means 16f. The receiving signal amplifying means 16a amplifies the signal received by the first sector zeroth-system antenna 1a. The receiving signal amplifying means 16e amplifies the signal received by the third sector zeroth-system antenna. Also, the receiving signal amplifying means 16f amplifies the signal received by the fifth sector zeroth-system antenna.

The second receiving signal amplifying unit 15b is provided with a receiving signal amplifying means 16c, a receiving signal amplifying means 16g, and a receiving signal amplifying means 16h. The receiving signal amplifying means 16c amplifies the signal received by the second sector zeroth-system antenna 2a. The receiving signal amplifying means 16g amplifies the signal received by the fourth sector zeroth-system antenna. Also, the receiving signal amplifying means 16h amplifies the signal received by the sixth sector zeroth-system antenna.

Similarly, the third receiving signal amplifying unit 15c is equipped with a receiving signal amplifying means for amplifying the signals received by the antennas of the first systems for each of the first, third, and fifth sectors. The fourth receiving signal amplifying unit 15c is equipped with a receiving signal amplifying means for amplifying the signals received by the antennas of the first systems for each of the second, fourth, and sixth sectors.

The first receiving unit 11a is equipped with three systems of receiving means for converting the signal amplified by the first receiving signal amplifying unit 15a. Similarly, each of the second to fourth receiving units 11b to 11d is equipped with three systems of receiving means for converting the signal amplified by each of the second to fourth receiving signal amplifying units 15b to 15d into the receiving baseband signal 3.

Next, a description will now be made of operations of the wireless communication base station with employment of the above-explained arrangement. In the above-described arrangement, for example, when a failure happens to occur in the first receiving signal amplifying unit 15a, the receiving signal amplifying unit failure sensing/controlling unit 17 senses the occurrence of this failure, and then performs the following control operations. That is, the power supply of the first receiving signal amplifying unit 15a is stopped, and an alarm signal is produced, for example, a light emission of an LED which can be recognized by a maintenance monitoring operator. At this time, the second to fourth receiving units 11b to 11d employed in the main body 10 of the base station apparatus performs such a signal converting operation as to the receiving signals outputted from the receiving signal amplifying means provided in the second to fourth receiving signal amplifying units 15b to 15d, which are converted into the receiving baseband signals 3.

Also, the receiving signal amplifying unit failure sensing/controlling unit 17 notifies the failure of the first receiving signal amplifying unit 15a with respect to the failure sensing/controlling unit 14. Based upon this notified result, the failure sensing/controlling unit 14 executes such a process operation that the power supply of the first receiving unit 11a is stopped.

In other words, in the case that a failure happens to occur in the first receiving signal amplifying unit 15a, or the first receiving signal amplifying unit 15a is being replaced, the main body 10 of the base station apparatus can execute the receiving process operation of the signals received by the signal received by the respective first-system antennas of the first sector, the third sector, and the fifth sector; and also the signals received by the second-system antennas, among the signals received by the respective first-system antennas of the second sector, the fourth sector, and the sixth sector, and further, the main body 10 of the base station apparatus can stop the power supply of the first receiving unit 11a every unit, in which the receiving signal is not transferred.

Also, in the above-described arrangement, for example, when a failure happens to occur in the first receiving unit 11a, the failure sensing/controlling unit 14 senses the occurrence of this failure, and then performs the following control operations. That is, the power supply of the first unit 11a is stopped, and an alarm signal is produced, for example, a light emission of an LED which can be recognized by a maintenance monitoring operator.

At this time, the second to fourth receiving units 11b to 11d employed in the main body 10 of the base station apparatus perform such a signal converting operation as to the receiving signals outputted from the receiving signal amplifying means provided in the second to fourth receiving signal amplifying unit 15b to 15d.

Also, the failure sensing/controlling unit 14 notifies the failure of the first receiving unit 11a with respect to the receiving signal amplifying unit failure sensing/controlling unit 17. Based upon this notified result, the receiving signal amplifying unit failure sensing/controlling unit 17 executes such a process operation that the power supply of the first receiving unit 15a is stopped.

In other words, in the case that a failure happens to occur in the first receiving unit 11a, or the first receiving unit 11a is being replaced, the main body 10 of the base station apparatus can execute the receiving process operation of the signals received by the signals received by the respective first-system antennas of the first sector, the third sector, and the fifth sector; and also the signals received by the second-system antennas, among the signals received by the respective first-system antennas of the second sector, the fourth sector, and the sixth sector, and further, the main body 10 of the base station apparatus can stop the power supply of the first receiving unit 11a every unit, in which the receiving signal is not transferred.

As previously described, in accordance with the wireless communication base station of the sixth embodiment mode of the present invention, in such a case that a failure happens to occur in one of arbitrary receiving signal amplifying units, or one of arbitrary receiving units while a plurality of receiving signal amplifying means are arranged within a single receiving signal amplifying unit, another receiving signal amplifying means, or another receiving means of the diversity receiving system of the same sector is so arranged as to be such a unit operable under normal condition. Also, the adjoining sectors are located in such a unit that the diversity function is operable under normal condition. As a result, even when the failure occurs in one of the arbitrary receiving signal amplifying units, or one of the arbitrary receiving units, the receiving functions of the respective sectors can be operated as a single branch, although the diversity gain is lowered. Furthermore, the receiving functions of the respective sectors can be smoothly handed over the adjoining sectors thereof where the diversity receiving functions are operated under normal condition. As a consequence, the base station apparatus can be made compact, while the communication area and the communication capacity are not largely lowered. Also, the wireless communication base station according to this fifth embodiment mode can simply reduce the unnecessary power consumption, as compared with that of the fourth embodiment mode of the present invention.

It should be understood that in this sixth embodiment mode, such an arrangement having two systems of the diversity receiving in the six sectors has been explained. In such a case that more than four sectors are employed and more than two diversity systems are employed, if a similar arrangement to the above-explained arrangement is employed, then a similar effect to the above-described effect may be achieved.

Next, a seventh embodiment mode of the present invention will now be described. The seventh embodiment mode of the present invention is featured by that in the above-explained arrangements according to the first embodiment mode to the sixth embodiment mode, a diversity receiving process operation is carried out between sectors by employing the code division multiplexing system.

As a consequence, operations of the seventh embodiment mode will now be described with reference to Fig. 2. In general, the Rake receiving system is known as one of the featured receiving systems belonging to the code division multiplexing system. The Rake receiving system is such a system that several receiving signals with superior receiving conditions are selected from a plurality of receiving signals (receiving paths) which are propagated through a plurality of wireless propagation paths and then are received by an antenna in different arrival times, and thereafter, these selectively received signals are synthesized with each other to obtain such a receiving signal having a superior communication quality.

The sector-to-sector diversity receiving process operation is such a receiving process operation that, for instance, while the Rake receiving system is applied to different sectors, several signals having superior receiving conditions are selected from the receiving paths received in the different sectors and then the selected signals are synthesized with each other.

A baseband signal processing unit 13 employed in the seventh embodiment mode of the present invention owns the following function. That is, for instance, a receiving which has been code-division-multiplexed by the spread spectrum system is processed by the despreding process operation, and then a desirable receiving signal component is derived by executing the sector-to-sector diversity receiving process operation.

When a wireless cell of a wireless communication base station in the seventh embodiment mode is constituted by a sector structure as shown in Fig. 18, for instance, in the case that a wireless terminal which is communicated with the above-explained wireless communication base station is located in the vicinity of a boundary between a first sector 25a and a second sector 25b, since an antenna of this base station owns a wider directivity characteristic than 60 degrees as represented in Fig. 19, a signal transmitted from the wireless terminal is received by the antennas of 4 systems shown in Fig. 2, namely, the first sector zeroth-system antenna 1a; the first sector first-system antenna 1b; the second sector zeroth-system antenna 2a; and the second sector first-system antenna 2b. The signals received by these antennas are converted into a receiving baseband signals 3 by the receiving section 12a, the receiving section 12b, the receiving section 12c, and the receiving section 12d. The baseband signal processing unit 13 executes the Rake receiving process as to the signals received by the antennas of 4 systems.

At this time, for example, when a failure happens to occur in the first receiving unit 11a, the failure sensing/controlling unit 14 senses the occurrence of this failure, and then performs the following control operations. That is, the power supply of the first receiving unit 11a is stopped, and an alarm signal is produced, for example, a light emission of an LED which can be recognized by a maintenance monitoring operator. The baseband signal processing unit 13 executes the signal process operations of the receiving baseband signals 3 derived from the receiving section 12b, the receiving section 12c, and the receiving section 12d.

In other words, the first sector zeroth-system antenna 1a corresponding to one antenna of the antenna diversity system of the first sector 25a cannot receive the signal, due to the occurrence of failure in the first receiving unit 11a. However, the Rake receiving can be carried out by the baseband signal processing unit 13 by employing the signals received by the antennas of 3 systems such as another diversity antenna 1b of this first sector 25a, and both the antennas 2a/2b of the second sector 25b, so that the wireless communication can be maintained while keeping the high diversity gain.

As a result, in accordance with the wireless communication base station according to the seventh embodiment mode of the present invention, since this wireless communication base station is arranged by employing the signal processing unit capable of performing the sector-to-sector diversity process operation of the receiving signals received from the difference sectors by way of the coding division multiplexing system, even when the failure happens to occur in any one arbitrary unit, the wireless communication base station apparatus can be made compact without largely reducing the communication area and the communication capacity, while maintaining the high diversity gain.

It should be noted that although the wireless communication base station according to the seventh embodiment mode has been described by using Fig. 2, when a similar signal process operation is carried out in Fig. 1 to Fig. 6, a similar effect may be achieved.

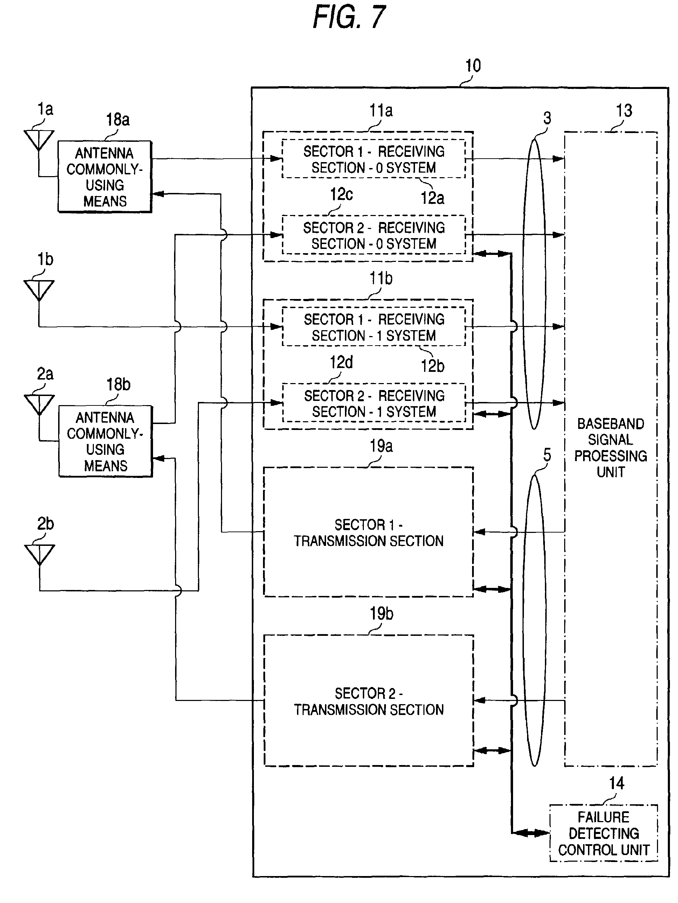

Next, a description will now be made of an eighth embodiment mode according to the present invention. Fig. 7 is a structural diagram for representing a wireless communication base station according to an eighth embodiment mode of the present invention. The wireless communication base station shown in Fig. 7 corresponds to such a base station that, for instance, while the own wireless cell is subdivided into two sectors, a diversity receiving is carried out by two sets of antennas in the respective sectors. In this case, the base station is arranged by antennas of 4 systems, namely, a first sector zeroth-system antenna 1a; a first sector first-system antenna 1b; a second sector zeroth-system antenna 2a; and a second sector first-system antenna 2b, a first antenna commonly-using means 18a and a second antenna commonly-using means 18b, and further a main body 10 of a base station apparatus.

The main body 10 of the base station apparatus is arranged by a receiving section 12a to a receiving section 12d of four systems; a first receiving unit 11a equipped with the receiving section 12a and the receiving section 12c; a second receiving unit 11b equipped with the receiving section 12b and the receiving section 12d, a first transmission unit 19a and a second transmission unit 19b, which are provided with transmission means for transmitting transmission signals, a baseband signal processing unit 13; and a failure sensing/controlling unit 14. The receiving sections 12a to 12d of the four systems correspond to receiving means for converting signals received by the respective antennas into, for instance, baseband signals 3. The baseband signal processing unit 13 executes a signal process operation such as the diversity signal process operation by which the receiving baseband signals 3 outputted from the respective receiving sections 12a to 12d are synthesized with each other by way of, for example, a maximum synthesizing ratio. Also, the baseband signal processing unit 13 outputs a transmission baseband signal 5 to both the first transmission unit 19a and the second transmission unit 19b. The failure sensing/controlling unit 14 senses failures occurred in the first receiving unit 11a and the second receiving unit 11b, or the first and second transmission units 19a and 19b to perform various control operations. For instance, an alarm signal is produced, and/or a supply of electric power is interrupted.

The receiving section 12a corresponds to such a receiving means for performing, for example, a receiving process operation by which the signal received by the first sector zeroth-system antenna 1a is converted into the receiving baseband signal 3. The receiving section 12b corresponds to such a receiving means for performing, for example, a receiving process operation by which the signal received by the first sector first-system antenna 1b is converted into the receiving baseband signal 3. The receiving section 12c corresponds to such a receiving means for performing, for example, a receiving process operation by which the signal received by the second sector zeroth-system antenna 2a is converted into the receiving baseband signal 3. The receiving section 12d corresponds to such a receiving means for performing, for example, a receiving process operation by which the signal received by the second sector first-system antenna 2b is converted into the receiving baseband signal 3. Also, the first transmission unit 19a is equipped with such a function corresponding to transmission means for transmitting a transmission signal from the first sector zeroth-system antenna 1a. The second transmission unit 19b is equipped with such a function corresponding to transmission means for transmitting a transmission signal from the second sector zeroth-system antenna 2a. Each of these transmission means is arranged by a modulator, a frequency mixer, a local oscillator, an amplifier, and the like.

Both the first antenna commonly-using means 18a and the second antenna commonly-using means 18b correspond to such antenna commonly-using means in which a single antenna is commonly used in transmission and receiving operations. Each of the first and second antenna commonly-using means 18a and 18b is constituted by, for example, a filter using a dielectric material, or a switch means for switching an antenna-sided terminal as a transmission-sided terminal and a receiving-sided terminal.

In the above-described arrangement, for example, when a failure happens to occur in the first receiving unit 11a, the failure sensing/controlling unit 14 senses the occurrence of this failure, and then performs the following control operations. That is, the power supply of the first receiving unit 11a is stopped, and an alarm signal is produced, for example, a light emission of an LED which can be recognized by a maintenance monitoring operator.

At this time, the baseband signal processing unit 13 performs such a signal process operation as to only the receiving baseband signals 3 outputted from the receiving sections 12b and 12d provided in the second receiving unit llb, and further outputs the transmission baseband signal 5 in a similar manner when the base station is operated under normal condition.

In other words, in the case that a failure happens to occur in the first receiving unit 11a, or the first receiving unit 11a is being replaced, the main body 10 of the base station apparatus can execute the receiving process operation of the signals received by both the first sector first-system antenna 1b and the second sector first-system antenna 2b, and also can output the transmission signals to both the first sector and the second sector.

As previously described, in accordance with the wireless communication base station of the eighth embodiment mode of the present invention, even when the failure occurs in one of the arbitrary receiving units, the receiving functions of the respective sectors can be operated, or are operable as a single branch, and the transmission functions of the respective sectors can be operated under normal condition, and furthermore, the single antenna can be commonly used in both the transmission operation and the receiving operation, although the diversity gain is lowered. As a consequence, the base station apparatus can be made compact, while the communication area and the communication capacity are not largely lowered.

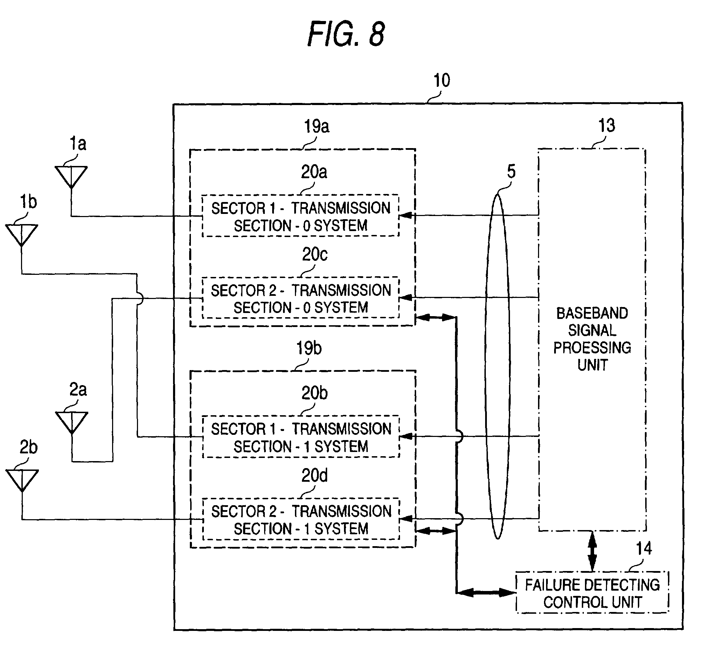

Next, a ninth embodiment mode of the present invention will now be explained with reference to Fig. 8. Fig. 8 is a structural diagram for representing a wireless communication base station according to a ninth embodiment mode of the present invention. In this drawing, the wireless communication base station shown in Fig. 8 corresponds to such a base station that, for instance, while the own wireless cell is subdivided into two sectors, a diversity transmission is carried out by two sets of antennas in the respective sectors. In this case, the base station is arranged by antennas of 4 systems, namely, a first sector zeroth-system antenna 1a; a first sector first-system antenna 1b; a second sector zeroth-system antenna 2a; and a second sector first-system antenna 2b, and further a main body 10 of a base station apparatus.

The main body 10 of the base station apparatus is arranged by a transmission section 20a to a transmission section 20d of four systems; a first transmission unit 19a equipped with the transmission section 20a and the transmission section 20c; a second transmission unit 19b equipped with the transmission section 20b and the transmission section 20d, a baseband signal processing unit 13, and a failure sensing/controlling unit 14. The transmission sections 20a to 20d of the four systems correspond to transmission means for converting, for example, transmission baseband signals 5 into transmission signals outputted from the respective antennas. The baseband signal processing unit 13 outputs the transmission baseband signal 5 corresponding to the transmission diversity to both the first transmission unit 19a and the second transmission unit 19b. The failure sensing/controlling unit 14 senses failures occurred in the first transmission unit 19a and the second transmission unit 19b to perform various control operations. For instance, an alarm signal is produced, and/or a supply of electric power is interrupted.

The transmission section 20a corresponds to such a transmission means for performing, for example, a transmission process operation by which a signal transmitted by the first sector zeroth-system antenna 1a is converted into the transmission baseband signal 5. The transmission section 20b corresponds to such a transmission means for performing, for example, a transmission process operation by which a signal transmitted by the first sector first-system antenna 1b is converted into the transmission baseband signal 5. The transmission section 20c corresponds to such a transmission means for performing, for example, a transmission process operation by which the signal received by the second sector zeroth-system antenna 2a is converted into the transmission baseband signal 5. The transmission section 20d corresponds to such a transmission means for performing, for example, a transmission process operation by which a signal transmitted by the second sector first-system antenna 2b is converted into the transmission baseband signal 5. Each of these transmission sections 20a, 20b, 20c, and 20d is arranged by an amplifier, a frequency mixer, a local oscillator, a modulator, and the like.

It should be understood that the baseband signal processing unit 13 for outputting the transmission baseband signal 5 corresponding to the transmission diversity corresponds to such a signal processing unit having, for instance, a baseband signal processing function corresponding to the transmission diversity typically known as the adaptive array antenna system. That is, while controlling amplitudes and phase of transmission signals which are transmitted from a plurality of antennas, this baseband signal processing unit performs the digital signal process operation for controlling the directivity characteristics of these plural antennas to obtain optimum antenna directivity.

In the above-described arrangement, for example, when a failure happens to occur in the first transmission unit 19a, the failure sensing/controlling unit 14 senses the occurrence of this failure, and then performs the following control operations. That is, the power supply of the first receiving unit 11a is stopped, and an alarm signal is produced, for example, a light emission of an LED which can be recognized by a maintenance monitoring operator.

At this time, the baseband signal processing unit 13 stops the signal processing operation of the adaptive array antenna, and outputs the transmission baseband signal 5 to both the transmission sections 20b and 20d provided in the second transmission unit 19b. In other words, in the case that a failure happens to occur in the first transmission unit 19a, or the first transmission unit 19a is being replaced, the main body 10 of the base station apparatus can output the transmission signals from both the first sector first-system antenna 1b and the second sector first-system antenna 2b.

That is to say, in accordance with the wireless communication base station of the ninth embodiment mode of the present invention, in such a case that a failure happens to occur in one of arbitrary transmission units while a plurality of transmission means are arranged within a single transmission unit, another transmission means of the diversity transmission system of the same sector is so arranged as to be such a unit operable under normal condition. As a result, even when the failure occurs in one of the arbitrary transmission units, the transmission functions of the respective sectors can be operated, or are operable as a single branch. As a consequence, the base station apparatus can be made compact, while the communication area and the communication capacity are not largely lowered.

Also, since the base station apparatus is not equipped with the auxiliary system and also the switching unit for this auxiliary system and the operation system, the base station apparatus can be made compact while maintaining the communication quality in a high grade.

It should also be noted that when more than 3 sectors are employed, or more than 3 diversity systems are employed, if a similar arrangement to the above-explained arrangement is used, then a similar effect to the above-described effect may be achieved.

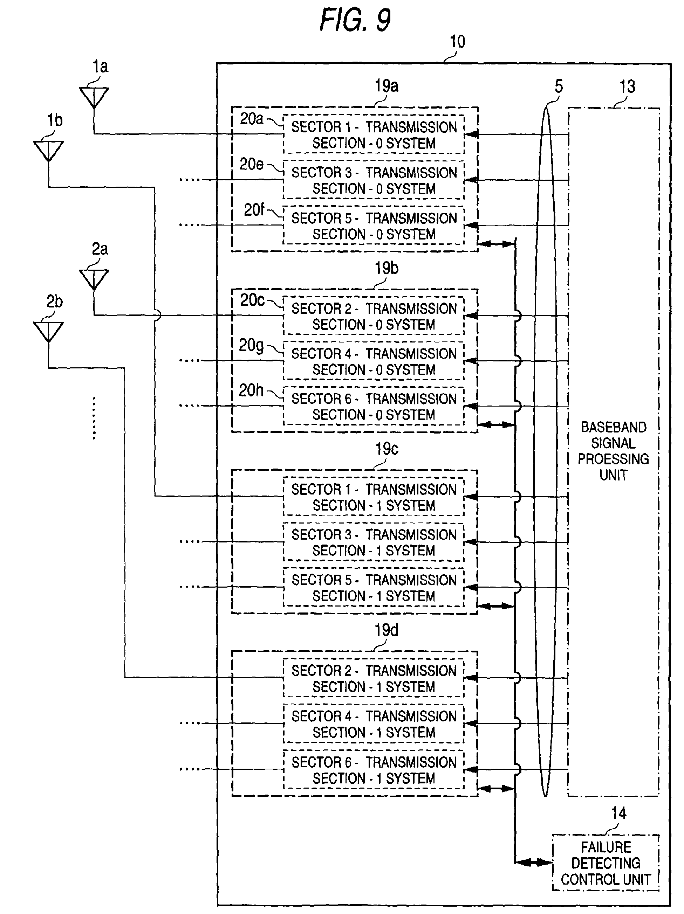

Next, a description will now be made of a tenth embodiment mode of the present invention. Fig. 9 is a structural diagram to show a wireless communication base station according to the tenth embodiment mode of the present invention. The wireless communication base station shown in Fig. 9 corresponds to such a base station that the own wireless cell is subdivided into, for example, 6 sectors, a diversity transmission is carried out by using two sets of antennas in each of these sectors. The wireless communication base station is arranged by 12 systems of antennas in total, and a main body 10 of a base station apparatus. The 12 systems of antennas are constituted by two systems of each of the six sectors, namely a first sector zeroth-system antenna 1a; a first sector first-system antenna 1b; a second sector zeroth-system antenna 2a; a second sector first-system antenna 2b and so on.

The main body 10 of the base station apparatus is arranged by 4 sets of first transmission unit 19a to fourth transmission unit 19d; a baseband signal processing unit 13; and a failure sensing/controlling unit 14. The first to fourth transmission units 19a to 19d are equipped with transmission means for converting the transmission baseband signal 5 into the transmission signals outputted from the respective antennas.

The first transmission unit 19a is provided with a transmission section 20a, a transmission section 20e, and a transmission section 20f. The transmission unit 20a converts the signal transmitted via the first sector zeroth-system antenna 1a from the transmission baseband signal 5. The transmission section 20e converts the signal transmitted via the third sector zeroth-system antenna from the transmission baseband signal 5. The transmission section 20f converts the signal transmitted via the fifth sector zeroth-system antenna from the transmission baseband signal 5. The second transmission section 19b is provided with a transmission section 20c, a transmission section 20g, and a transmission section 20h. The transmission section 20c converts the signal transmitted from the second sector zeroth-system antenna 2a from the transmission baseband signal 5. The transmission section 20g converts the signal transmitted via the fourth sector zeroth-system antenna from the transmission baseband signal 5. The transmission section 20h converts the signal transmitted via the fifth sector zeroth-system antenna from the transmission baseband signal 5.

Similarly, the third transmission unit 19c is provided with a transmission section for outputting the signals which are transmitted via the antennas of the first systems of each of the first, third, and fifth sectors. Also, the fourth transmission unit 19d is provided with a transmission section for outputting the signals which are transmitted via the antennas of the first systems of each of the second, fourth, and sixth sectors.

Next, operations of the wireless communication base station with employment of the above-described arrangement will now be described. In the arrangement of the tenth embodiment mode, for example, when a failure happens to occur in the first transmission unit 19a, the failure sensing/controlling unit 14 senses the occurrence of this failure, and then performs the following control operations. That is, the power supply of the first transmission unit 19a is stopped, and an alarm signal is produced, for example, a light emission of an LED which can be recognized by a maintenance monitoring operator, and the notification to the baseband signal processing unit 13 is made.

At this time, the baseband signal processing unit 13 stops the signal process operations of the adaptive array antennas of the first sector, the third sector, and the fifth sector, and also executes such a signal process operation that the transmission baseband signal 5 is outputted to the transmission sections provided in the second transmission unit 19b, the third transmission unit 19c, and the fourth transmission unit 19d.

In other words, since the first transmission unit 19a fails, the diversity transmissions by the first sector, the third sector, and the fifth sector cannot be carried out. However, the signals can be transmitted via the respective first-system antennas, since the third transmission unit 19c is operated under normal condition.

Also, in the first sector, the third sector, and the fifth sector, since the transmission diversity does not function, either the communication area of this sector becomes narrow or the quality of the wireless communication is deteriorated. However, the diversity transmission may satisfactorily function in the second sector, the fourth sector, and the sixth sector, which are located adjacent to the above-described first, third, and fifth sectors. For instance, a wireless terminal which is communicated with the base station in the first sector is smoothly handed over the above-explained adjoining sector whose communication condition becomes better, so that the wireless communication can be sufficiently maintained.

As previously described, in accordance with the wireless communication base station of the tenth embodiment mode of the present invention, in such a case that a failure happens to occur in one of arbitrary transmission units while a plurality of transmission means are arranged within a single transmission unit, another transmission means of the diversity transmission system of the same sector is so arranged as to be such a unit operable under normal condition. Also, the adjoining sectors are located in such a unit that the diversity function is operable under normal condition. As a result, even when the failure occurs in one of the arbitrary transmission units, the transmission functions of the respective sectors can be operated as a single branch, although the diversity gain is lowered. Furthermore, the transmission functions of the respective sectors can be smoothly handed over the adjoining sectors thereof where the diversity transmission functions are operated under normal condition. As a consequence, the base station apparatus can be made compact, while the communication area and the communication capacity are not largely lowered.

It should be understood that in this tenth embodiment mode, such an arrangement having two systems of the diversity transmission in the six sectors has been explained. In such a case that more than four sectors are employed and more than two diversity systems are employed, if a similar arrangement to the above-explained arrangement is employed, then a similar effect to the above-described effect may be achieved.

Next, an eleventh embodiment mode of the present invention will now be explained. The eleventh embodiment mode of the present invention is featured by that in the arrangements according to the ninth embodiment mode and the tenth embodiment mode, a wireless communication is carried out with respect to a wireless terminal apparatus for executing a sector-to-sector diversity receiving process operation by way of the code division multiplexing system.

Operations of the eleventh embodiment mode will now be explained with reference to Fig. 9. As one of the features realized by the code division multiplexing system, a plurality of channels can be transferred within the same frequency band. A wireless terminal can own such a sector-to-sector diversity receiving function that this wireless terminal receives at the same time signals having the same frequency range, which are transmitted from antennas of different sectors of a base station, and executes the Rake receiving from the signals of these plural sectors so as to obtain a receiving signal having a superior quality. As a consequence, even when a complex signal process operation such as an adaptive array is not carried out in the base station, an area of a wireless communication and also a quality of the wireless communication can be improved.

A baseband signal processing unit 13, according to the eleventh embodiment mode of the present invention, outputs a transmission baseband signal 5 which is code-division-multiplexed by way of the spread spectrum to the respective transmission units in such a manner that the base station outputs transmission signals from a plurality of sectors with respect to the wireless terminal.

When a wireless cell of a wireless communication base station in the eleventh embodiment mode is constituted by a sector structure as shown in Fig. 18, for instance, in the case that a wireless terminal which is communicated with the above-explained wireless communication base station is located in the vicinity of a boundary between a first sector 25a and a second sector 25b, since an antenna of this base station owns a wider directivity characteristic than 60 degrees as represented in Fig. 19, the wireless terminal can receive signals which are transmitted from a first sector zeroth-system antenna 1a, a first sector first-system antenna 1b, a second sector zeroth-system antenna 2a, and a second sector first-system antenna 2b, namely transmitted from antennas of fourth systems.

For example, when a failure happens to occur in the first transmission unit 19a, the failure sensing/controlling unit 14 senses the occurrence of this failure, and then performs the following control operations. That is, the power supply of the first transmission unit 19a is stopped, and an alarm signal is produced, for example, a light emission of an LED which can be recognized by a maintenance monitoring operator, and also a notification to the baseband signal processing unit 13 is made.

At this time, the baseband signal processing unit 13 stops outputting of the transmission baseband signal 5 with respect to the first transmission unit 19a, and performs such a signal process operation that the transmission baseband signals 5 are outputted to the transmission units provided in the second transmission unit 19b, the third transmission unit 19c, and the fourth transmission unit 19d.

In other words, the signals cannot be transmitted from the zeroth-system antennas of the first sector, the third sector, and the fifth sector, since the failure happens to occur in the first transmission unit 19a. However, the transmission signals can be transmitted via the respective first-system antennas, since the third transmission unit 19c is operated under normal condition.

Also, in the first sector, the third sector, and the fifth sector, since the signals are transmitted as a single branch, either the communication area of this sector becomes narrow or the quality of the wireless communication is deteriorated. However, the signal transmissions may function from the antennas of zeroth-system and the first system in the second sector, the fourth sector, and the sixth sector, which are located adjacent to the above-described first, third, and fifth sectors. As a result, in the case that the wireless terminal is located in the vicinity of the boundary between the first sector 25a and the second sector 25b, and the Rake receiving can be done by employing the signals transmitted from the antennas of the three systems, and also the communication can abe maintained while keeping the high diversity gain.

As previously described, in accordance with the wireless communication base station of the eleventh embodiment mode of the present invention, while the base station does not carry out such a complex process operation corresponding to the adaptive array antenna system, even when a failure happens to occur in any one of the arbitrary units, the base station apparatus can be made compact, while the communication area and the communication capacity are not largely lowered.

It should be understood that in this eleventh embodiment mode, such an arrangement shown in Fig. 9 is employed so as to explain this embodiment mode. If a similar operation to the above-explained signal process operation is performed, then a similar effect to the above-described effect may be achieved.

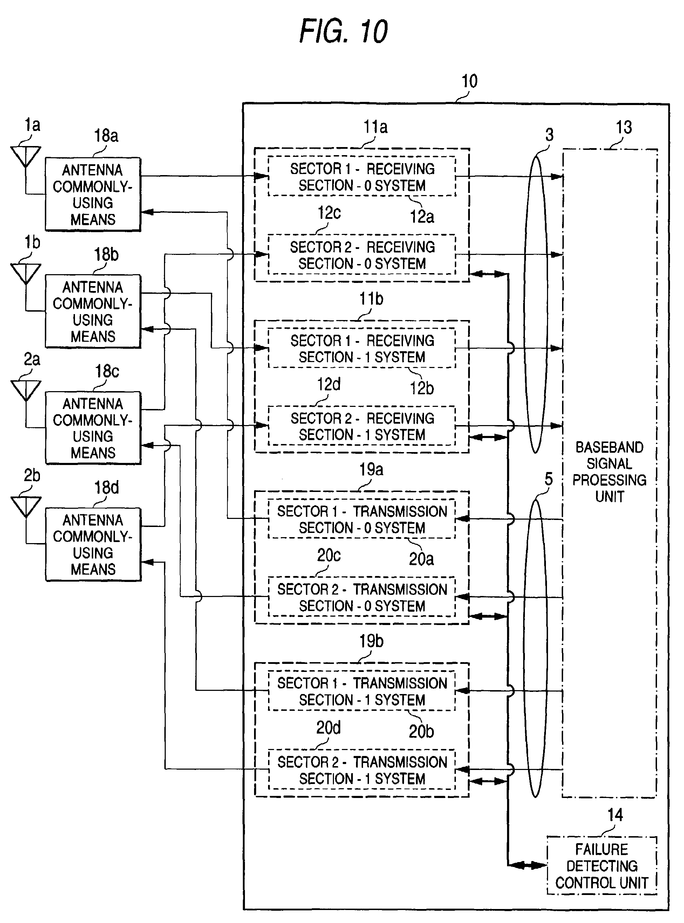

Next, a description will now be made of a twelfth embodiment mode according to the present invention. Fig. 10 is a structural diagram for representing a wireless communication base station according to a twelfth embodiment mode of the present invention. The wireless communication base station shown in Fig. 10 corresponds to such a base station that, for instance, while the own wireless cell is subdivided into two sectors, a diversity transmission/receiving is carried out by two sets of antennas in the respective sectors. In this case, the base station is arranged by antennas of 4 systems, namely, a first sector zeroth-system antenna 1a; a first sector first-system antenna 1b; a second sector zeroth-system antenna 2a; and a second sector first-system antenna 2b, a first antenna commonly-using means 18a; a second antenna commonly-using means 18b, a third antenna commonly-using means 18c; and a fourth antenna commonly-using means 18d, and further a main body 10 of a base station apparatus.

The main body 10 of the base station apparatus is arranged by a receiving section 12a to a receiving section 12d of four systems; a first receiving unit 11a equipped with the receiving section 12a and the receiving section 12c; a second receiving unit 11b equipped with the receiving section 12b and the receiving section 12d; a first transmission section 20a to a fourth transmission section 20d; a first transmission unit 19a equipped with the transmission unit 20a and the transmission unit 20c; a second transmission unit 19b equipped with the transmission unit 20b and the transmission unit 20d; a baseband signal processing unit 13; and a failure sensing/controlling unit 14. The receiving sections 12a to 12d of the four systems correspond to receiving means for converting signals received by the respective antennas into, for instance, baseband signals 3. The transmission sections 20a to 20d correspond to transmission means for converting, for example, transmission baseband signals 5 into signals which are transmitted from the respective antennas. The baseband signal processing unit 13 executes a signal process operation such as the diversity signal process operation by which the receiving baseband signals 3 outputted from the respective receiving sections 12a to 12d are synthesized with each other by way of, for example, a maximum synthesizing ratio. Also, the baseband signal processing unit 13 outputs transmission baseband signals 5 to the transmission sections 20a to 20d. The failure sensing/controlling unit 14 senses failures occurred in the first receiving unit 11a and the second receiving unit 11b, or the first and second transmission units 19a and 19b to perform various control operations. For instance, an alarm signal is produced, and/or a supply of electric power is interrupted.

The receiving section 12a corresponds to such a receiving means for performing, for example, a receiving process operation by which the signal received by the first sector zeroth-system antenna 1a is converted into the receiving baseband signal 3. The receiving section 12b corresponds to such a receiving means for performing, for example, a receiving process operation by which the signal received by the first sector first-system antenna 1b is converted into the receiving baseband signal 3. The receiving section 12c corresponds to such a receiving means for performing, for example, a receiving process operation by which the signal received by the second sector zeroth-system antenna 2a is converted into the receiving baseband signal 3. The receiving section 12d corresponds to such a receiving means for performing, for example, a receiving process operation by which the signal received by the second sector first-system antenna 2b is converted into the receiving baseband signal 3. Also, the transmission section 20a corresponds to transmission means for converting a transmission signal transmitted from the first sector zeroth-system antenna 1a into the transmission baseband signal 5. The transmission section 20b corresponds to transmission means for converting a transmission signal transmitted from the second sector zeroth-system antenna 2a into the transmission baseband signal 5. The transmission section 20c corresponds to transmission means for converting a transmission signal transmitted from the second sector zeroth-system antenna 2a into the transmission baseband signal 5. Also, the transmission section 20d corresponds to transmission means for converting a transmission signal transmitted from the second sector first-system antenna 2b into the transmission baseband signal 5. The first to fourth antenna commonly-using means 18a to 18d correspond to antenna commonly-using means for commonly using a single antenna both in the transmission operation and the receiving operation.

Next, operation of the wireless communication base station with the above-described arrangement will now be described. In the above-described arrangement, in the case that a failure happens to occur in the first receiving unit 11a, or the first receiving unit 11a is being replaced, the main body 10 of the base station apparatus can execute the receiving process operation of the signals received by both the first sector first-system antenna 1b and the second sector first-system antenna 2b. Also, the main body 10 can output the diversity transmission signals to both the first sector and the second sector. Also, in response to stopping of the receiving functions of the zeroth-system antennas provided in the respective sectors, the main body 10 of the base station apparatus can stop the diversity signal process operation of the transmission, for example, can execute such a process operation for stopping the power supply of the first transmission unit 19a.

Also, when a failure happens to occur in the first transmission unit 19a, or the first transmission unit 19a is being replaced, the main body 10 of the base station apparatus can transmit the transmission signals from the first sector first-system antenna 1b and the second sector first-system antenna 2b.

In other words, in accordance with the wireless communication base station of the twelfth embodiment mode of the present invention, even when the failure occurs in one of the arbitrary receiving units, or the arbitrary transmission units, the receiving functions or the transmission functions of the respective sectors can be operated, or are operable as a single branch, although the diversity gain is lowered. Furthermore, the base station is arranged by commonly using the antenna both in the transmission operation and the receiving operation. As a consequence, the base station apparatus can be made compact, while the communication area and the communication capacity are not largely lowered. Furthermore, the unnecessary power consumption occurred during either the failure or the maintenance can be reduced.

It should also be noted that when more than 3 sectors are employed, or more than 3 diversity systems are employed, if a similar arrangement to the above-explained arrangement is used, then a similar effect to the above-described effect may be achieved.

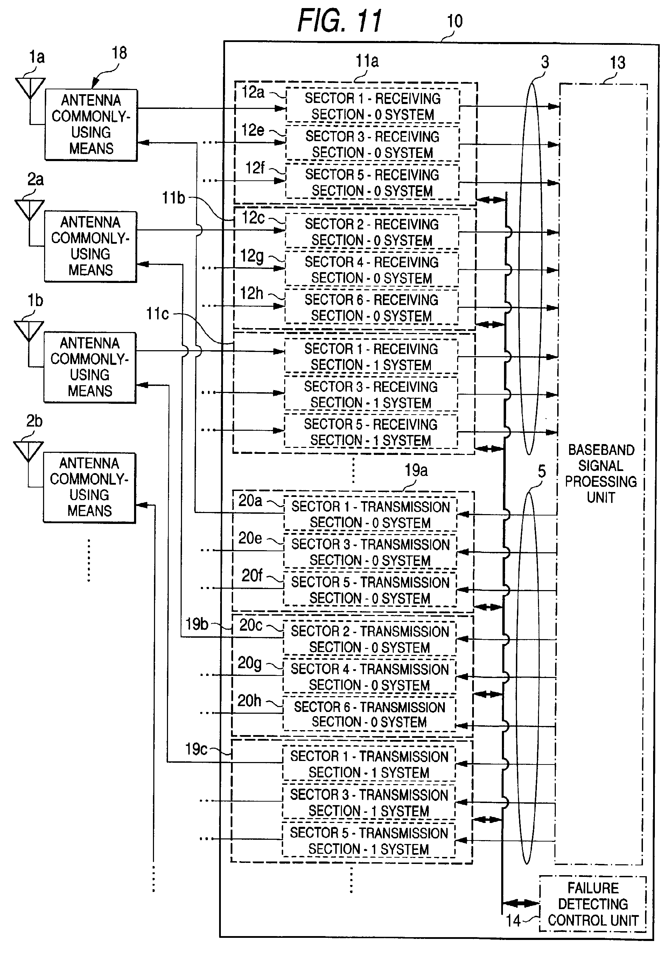

Next, a description will now be made of a 13th embodiment mode of the present invention. Fig. 11 is a structural diagram to show a wireless communication base station according to the 13th embodiment mode of the present invention. The wireless communication base station shown in Fig. 11 corresponds to such a base station that the own wireless cell is subdivided into, for example, 6 sectors, a diversity transmission is carried out by using two sets of antennas in each of these sectors. The wireless communication base station is arranged by 12 systems of antennas in total, 12 systems of antenna commonly-using means, and a main body 10 of a base station apparatus. The 12 systems of antennas are constituted by two systems of each of the six sectors, namely a first sector zeroth-system antenna 1a; a first sector first-system antenna 1b; a second sector zeroth-system antenna 2a; a second sector first-system antenna 2b and so on. The antenna-commonly-using means commonly uses each antenna both in transmission/receiving operations.

The main body 10 of the base station apparatus is arranged by 4 sets of first transmission unit 19a to fourth transmission unit 19d; 4 sets of first receiving unit 11a to fourth receiving unit lid; a baseband signal processing unit 13; and a failure sensing/controlling unit 14. The first to fourth transmission units 19a to 19d are equipped with transmission means for converting, for example, the transmission baseband signal 5 into the transmission signals outputted from the respective antennas. The first receiving unit 11a to the fourth receiving unit 11d are equipped with receiving means for converting the signals received by the respective antennas into, for example, the receiving baseband signals 3. The baseband signal processing unit 13 executes such a signal process operation of the receiving baseband signals 3 outputted from the respective receiving sections 12a to 12d, typically known as the diversity signal process of the maximum ratio synthesizing operation. Also, this baseband signal processing unit 13 outputs the transmission baseband signals 5 corresponding to the transmission diversity to the transmission sections 20a to 20d.

The first receiving unit 11a is provided with a receiving section 12a, a receiving section 12e, and a receiving section 12f. The receiving unit 12a converts the signal received by the first sector zeroth-system antenna 1a into the receiving baseband signal 3. The receiving section 12e converts the signal received by the third sector zeroth-system antenna into the receiving baseband signal 3. The receiving section 12f converts the signal received by the fifth sector zeroth-system antenna into the receiving baseband signal 3. The second receiving section 11b is provided with a receiving section 12c, a receiving section 12g, and a receiving section 12h. The receiving section 12c converts the signal received by the second sector zeroth-system antenna 2a into the receiving baseband signal 3. The receiving section 12g converts the signal received by the fourth sector zeroth-system antenna into the receiving baseband signal 3. The receiving section 12h converts the signal received by the fifth sector zeroth-system antenna into the receiving baseband signal 3.

Similarly, the third receiving unit 11c is provided with a receiving section for performing receiving process operations of the signals which are received by the antennas of the first systems of each of the first, third, and fifth sectors. Also, the fourth receiving unit 11d is provided with a receiving section for performing receiving process operations of the signals which are received by the antennas of the first systems of each of the second, fourth, and sixth sectors.

The first transmission unit 19a is provided with a transmission section 20a, a transmission section 20e, and a transmission section 20f. The transmission unit 20a converts the signal transmitted via the first sector zeroth-system antenna 1a from the transmission baseband signal 5. The transmission section 20e converts the signal transmitted via the third sector zeroth-system antenna from the transmission baseband signal 5. The transmission section 20f converts the signal transmitted via the fifth sector zeroth-system antenna from the transmission baseband signal 5. The second transmission section 19b is provided with a transmission section 20c, a transmission section 20g, and a transmission section 20h. The transmission section 20c converts the signal transmitted from the second sector zeroth-system antenna 2a from the transmission baseband signal 5. The transmission section 20g converts the signal transmitted via the fourth sector zeroth-system antenna from the transmission baseband signal 5. The transmission section 20h converts the signal transmitted via the fifth sector zeroth-system antenna from the transmission baseband signal 5.

Similarly, the third transmission unit 19c is provided with a transmission section for outputting the signals which are transmitted via the antennas of the first systems of each of the first, third, and fifth sectors. Also, the fourth transmission unit 19d is provided with a transmission section for outputting the signals which are transmitted via the antennas of the first systems of each of the second, fourth, and sixth sectors.

Next, operations of the wireless communication base station with employment of the above-described arrangement will now be described. In the arrangement of the 13th embodiment mode, for example, when a failure happens to occur in the first receiving unit 11a, the failure sensing/controlling unit 14 senses the occurrence of this failure, and then performs the following control operations. That is, the power supply of the first receiving unit 11a is stopped, and an alarm signal is produced, for example, a light emission of an LED which can be recognized by a maintenance monitoring operator.

At this time, the baseband signal processing unit 13 executes such a signal process operation for the receiving baseband signal 3 outputted from the receiving section 12 provided in the second receiving unit 11b to, the third receiving unit 11c up to the fourth receiving unit 11d.

In other words, since the failure occurs in the first receiving unit 11a, the signal receiving cannot be carried out by the respective zeroth-system antennas of the first sector, the third sector, and the fifth sector. However, the signals can be received by the third receiving unit 11c where the respective first-system antennas are operated under normal operation. Also, the baseband signal processing unit 13 can stop the transmission diversity signal processing operations of the first sector, the third sector, and the fifth sector, for example, can perform stopping of the power supply of the first transmission unit 19a.

Also, in the first sector, the third sector, and the fifth sector, since the receiving diversity gain is lowered, either the communication area of this sector becomes narrow or the quality of the wireless communication is deteriorated. However, the diversity receiving may satisfactorily function in the second sector, the fourth sector, and the sixth sector, which are located adjacent to the above-described first, third, and fifth sectors. For instance, a wireless terminal which is communicated with the base station in the first sector is smoothly handed over the above-explained adjoining sector whose communication condition becomes better, so that the wireless communication can be sufficiently maintained.

In other words, in accordance with the wireless communication base station of the 13th embodiment mode of the present invention, even when the failure occurs in one of the arbitrary transmission units, or the arbitrary receiving units, the transmission functions, or the receiving functions of the respective sectors can be operated as a single branch, although the diversity gain is lowered. Furthermore, the diversity transmission functions, or the diversity receiving functions of the respective sectors can be smoothly handed over the adjoining sectors thereof where the diversity transmission, or receiving functions are operated under normal condition. As a consequence, the base station apparatus can be made compact, while the communication area and the communication capacity are not largely lowered. Also, the unnecessary power consumption required while the failure occurs, or the maintenance is carried out can be reduced.

It should also be noted that in this 13th embodiment mode, such an arrangement having two systems of the diversity transmission in the six sectors has been explained. In such a case that more than four sectors are employed and more than two diversity systems are employed, if a similar arrangement to the above-explained arrangement is employed, then a similar effect to the above-described effect may be achieved.

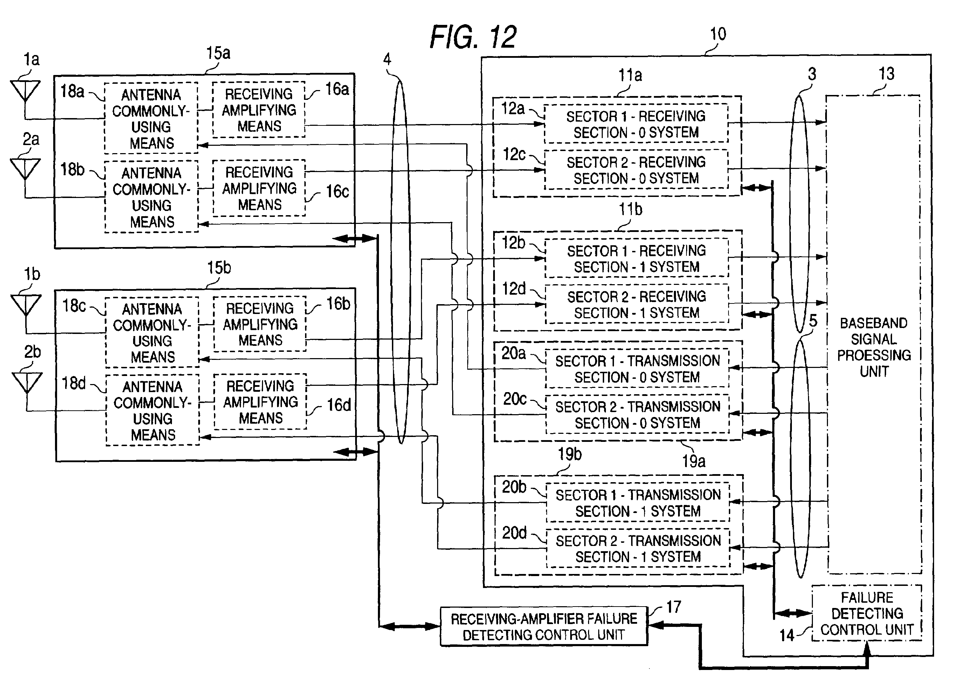

Next, a description will now be made of a 14th embodiment mode of the present invention. Fig. 12 is a structural diagram for representing a communication base station according to a 14th embodiment mode of the present invention. The wireless communication base station shown in Fig. 12 corresponds to such a base station that, for instance, while the own wireless cell is subdivided into two sectors, a diversity transmission/receiving is carried out by two sets of antennas in the respective sectors. In this case, the base station is arranged by antennas of 4 systems, namely, a first sector zeroth-system antenna 1a; a first sector first-system antenna 1b; a second sector zeroth-system antenna 2a; and a second sector first-system antenna 2b, and also a main body 10 of a base station apparatus. This base station is further arranged by a first receiving signal amplifying unit 15a; a second receiving signal amplifying unit 15b; a coaxial cable 4 used to transfer a receiving signal among the first receiving signal amplifying unit 15a, the second receiving signal amplifying unit 15b, and the main body 10 of the base station; and a receiving signal amplifying unit failure sensing/controlling unit 17 for sensing failures occurred in the first and second receiving signal amplifying units 15a and 15b, and performs a control operation, for example, a production of an alarm signal, and an interruption of a power supply.

The first receiving signal amplifying unit 15a is equipped with receiving signal amplifying means 16a and 16c, and also both first antenna commonly-using means 18a and second antenna commonly-using means 18b. The second receiving signal amplifying unit 15b is equipped with receiving signal amplifying means 16b and 16d, and also third antenna commonly-using means 18c and fourth antenna commonly-using means 18d.

Also, the main body 10 of the base station apparatus is arranged by a receiving section 12a to a receiving section 12d of four systems; a first receiving unit 11a equipped with the receiving section 12a and the receiving section 12c; a second receiving unit 11b equipped with the receiving section 12b and the receiving section 12d; transmission sections 20a and 20d of 4 systems; a first transmission unit 19a equipped with the transmission section 20a and the transmission section 20c; a second transmission unit 19b equipped with the transmission section 20b and the transmission section 20d; and also a baseband signal processing unit 13; and further, a failure sensing/controlling unit 14 for sensing occurrences of failures in the first and second receiving units 11a and 11b, or the first and second transmission units 19a and 19b, and performs a control operation, namely a production of an alarm signal, and an interruption of a power supply. The receiving sections 12a to 12d of the four systems correspond to receiving means for converting signals amplified by the respective receiving signal amplifying means 16a to 16d into baseband signals 3. The transmission sections 20a to 20d of the four systems correspond to transmission means for converting, for example, the transmission baseband signals into signals which are transmitted from the respective antennas. The baseband signal processing unit 13 executes such a signal process operation of the receiving baseband signals outputted from the respective receiving units 12a to 12d, typically known as the diversity of synthesizing these receiving baseband signals by a maximum synthesizing ratio. Also, this baseband signal processing unit 13 outputs the transmission baseband signals corresponding to the transmission diversity to the transmission sections 20a to 20d.

The receiving signal amplifying means 16a corresponds to such a receiving signal amplifying means for amplifying the signal received by the first sector zeroth-system antenna 1a by, for example, low noise. The receiving signal amplifying means 16b corresponds to such a receiving signal amplifying means for amplifying the signal received by the first sector first-system antenna 1b by, for example, low noise. The receiving signal amplifying means 16c corresponds to such a receiving signal amplifying means for amplifying the signal received by the second sector zeroth-system antenna 2a by, for example, low noise. The receiving signal amplifying means 16d corresponds to such a receiving signal amplifying means for amplifying the signal received by the second sector first-system antenna 2b by, for example, low noise.

The first to fourth antenna commonly-using means 18a to 18d correspond to such antenna commonly-using means for commonly using a single antenna in both the transmission and the receiving operations.

The receiving section 12a corresponds to such a receiving means for performing, for example, a receiving process operation by which the signal received by the first sector zeroth-system antenna 1a is converted into the receiving baseband signal 3. The receiving section 12b corresponds to such a receiving means for performing, for example, a receiving process operation by which the signal received by the first sector first-system antenna 1b is converted into the receiving baseband signal 3. The receiving section 12c corresponds to such a receiving means for performing, for example, a receiving process operation by which the signal received by the second sector zeroth-system antenna 2a is converted into the receiving baseband signal 3. The receiving section 12d corresponds to such a receiving means for performing, for example, a receiving process operation by which the signal received by the second sector first-system antenna 2b is converted into the receiving baseband signal 3. The transmission section 20a corresponds to such a transmission means for performing, for example, a transmission process operation by which a signal transmitted by the first sector zeroth-system antenna 1a is converted into the transmission baseband signal 5. The transmission section 20b corresponds to such a transmission means for performing, for example, a transmission process operation by which a signal transmitted by the first sector first-system antenna 1b is converted into the transmission baseband signal 5. The transmission section 20c corresponds to such a transmission means for performing, for example, a transmission process operation by which the signal received by the second sector zeroth-system antenna 2a is converted into the transmission baseband signal 5. The transmission section 20d corresponds to such a transmission means for performing, for example, a transmission process operation by which a signal transmitted by the second sector first-system antenna 2b is converted into the transmission baseband signal 5.

Next, a description will now be made of operations of the wireless communication base station with employment of the above-explained arrangement. In the above-described arrangement, for example, when a failure happens to occur in the first receiving signal amplifying unit 15a, the receiving signal amplifying unit failure sensing/controlling unit 17 senses the occurrence of this failure, and then performs the following control operations. That is, the power supply of the first receiving signal amplifying unit 15a is stopped, and an alarm signal is produced, for example, a light emission of an LED which can be recognized by a maintenance monitoring operator. At this time, the second receiving unit 11b employed in the main body 10 of the base station apparatus performs such a signal converting operation as to the receiving signals outputted from the receiving signal amplifying means 16b and 16d provided in the second receiving signal amplifying unit 15b into the baseband signals 3.

Also, the receiving signal amplifying unit failure sensing/controlling unit 17 notifies the failure of the first receiving signal amplifying unit 15a with respect to the failure sensing/controlling unit 14. Based upon this notified result, the failure sensing/controlling unit 14 executes such a process operation that the power supply of the first receiving unit 11a is stopped. Also, the failure sensing/controlling unit 14 may perform a process operation for stopping the power supply of the first transmission unit 19a, if required.

In other words, in the case that a failure happens to occur in the first receiving signal amplifying unit 15a, or the first receiving signal amplifying unit 15a is being replaced, the main body 10 of the base station apparatus can execute the receiving process operation of the signals received by both the first sector first-system antenna 1b and the second sector first-system antenna 2b. Furthermore, the main body 10 of the base station apparatus can stop the power supply of the first receiving unit 11a every unit, in which the receiving signal is not transferred, and also can stop the diversity signal process operation of the transmission in response to stopping of the receiving functions of the zeroth-system antennas of the respective sectors. For example, this main body 10 of the base station apparatus may perform the process operation of stopping of the power supply employed in the first transmission unit 19a every unit.

Also, even in the case that a failure happens to occur in either an arbitrary receiving unit or an arbitrary transmission unit, the main body 10 of the base station apparatus can maintain either the receiving function or the transmission function as a single branch in the first sector and the second sector, and further, my execute the process operation of stopping the power supply every unit.

That is to say, in accordance with the wireless communication base station of the 14th embodiment mode of the present invention, even when the failure occurs in one of the arbitrary receiving signal amplifying units, or one of the arbitrary receiving units, or the arbitrary transmission units, the receiving functions, or transmission unctions of the respective sectors can be operated, or are operable as a single branch, although the diversity gain is lowered. Furthermore, the antenna is commonly used in both the transmission and the receiving operation. As a consequence, the base station apparatus can be made compact, while the communication area and the communication capacity are not largely lowered. The wireless communication base station can simply reduce unnecessary power consumption required during the occurrence of failure, or the maintenance. It should also be noted that when more than 3 sectors are employed, or more than 3 diversity systems are employed, if a similar arrangement to the above-explained arrangement is used, then a similar effect to the above-described effect may be achieved.

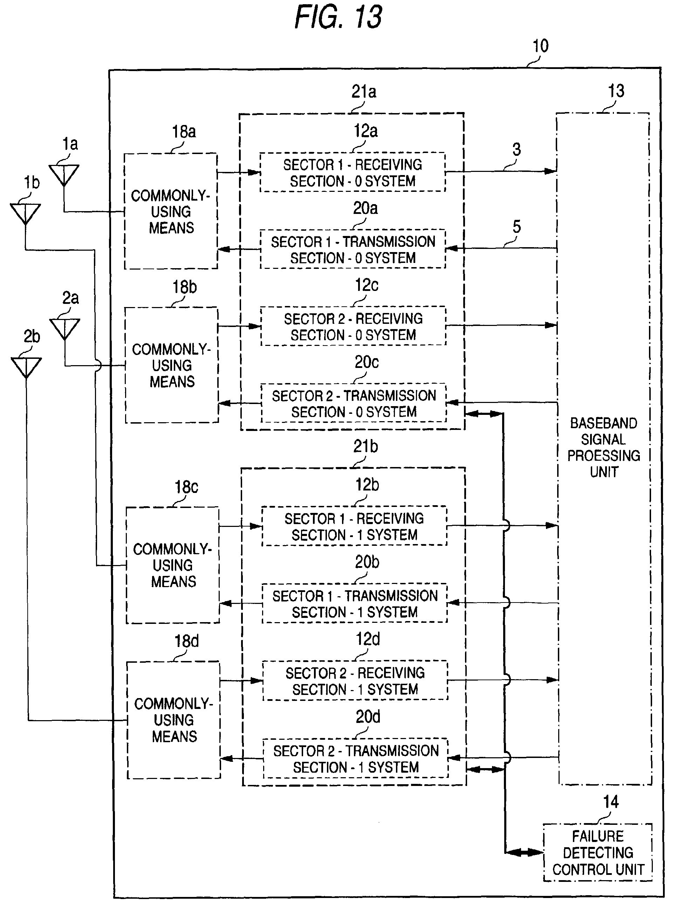

Next, a description will now be made of a 15th embodiment mode according to the present invention. Fig. 13 is a structural diagram for representing a wireless communication base station according to a 15th embodiment mode of the present invention. The wireless communication base station shown in Fig. 13 corresponds to such a base station that, for instance, while the own wireless cell is subdivided into two sectors, a diversity transmission/receiving is carried out by two sets of antennas in the respective sectors. In this case, the base station is arranged by antennas of 4 systems, namely, a first sector zeroth-system antenna 1a; a first sector first-system antenna 1b; a second sector zeroth-system antenna 2a; and a second sector first-system antenna 2b, and further a main body 10 of a base station apparatus.

The main body 10 of the base station apparatus is arranged by first antenna commonly-using means 18a; second antenna commonly-using means 18b; third antenna commonly-using means 18c; fourth antenna commonly-using means 18d; a transmission section 10a to a transmission section 20d of four systems; a first transmission/receiving unit 21a equipped with the receiving sections 12a/12c and the transmission sections 20a/20c; a second transmission/receiving unit 21b equipped with the receiving sections 12a/12d and the transmission sections 20b/20d; and a baseband signal processing unit 13, and also a failure sensing/controlling unit 14. The receiving sections 12a to 12d of the four systems correspond to receiving means for converting signals received by the respective antennas into, for example, baseband signals 3. The transmission sections 20a to 20d of the four systems correspond to transmission means for converting, for example, the transmission baseband signals into signals which are transmitted from the respective antennas. The baseband signal processing unit 13 executes a signal process operation such as the diversity signal process operation by which the receiving baseband signals 3 outputted from the respective receiving sections 12a to 12d are synthesized with each other by way of, for example, a maximum synthesizing ratio. Also, the baseband signal processing unit 13 outputs the transmission baseband signal 5 corresponding to the transmission diversity to both the transmission section 20a and the transmission section 20b. The failure sensing/controlling unit 14 senses failures occurred in the first transmission/receiving unit 21a and the second transmission/receiving unit 21b, to perform various control operations. For instance, an alarm signal is produced, and/or a supply of electric power is interrupted.

Subsequently, a description will now be made of operations of the wireless communication base station with employment of the above-explained arrangement. In the above-described arrangement, for example, when a failure happens to occur in the first transmission/receiving unit 21a, the failure sensing/controlling unit 14 senses the occurrence of this failure, and then performs the following control operations. That is, the power supply of the first transmission/receiving unit 21a is stopped, and an alarm signal is produced, for example, a light emission of an LED which can be recognized by a maintenance monitoring operator.

At this time, the second transmission/receiving unit 21b of the base station apparatus main body 10 can perform the transmission/receiving process operations of the first sector first-system antenna 1b and of the second sector first-system antenna 2b. In other words, in the case that a failure happens to occur in the first transmission/receiving unit 21a, or the first transmission/receiving unit 21a is being replaced, the main body 10 of the base station apparatus can execute the receiving process operation of the signals received by both the first sector first-system antenna 1b and the second sector first-system antenna 2b, and also can output the transmission signals to both the first sector first-system antenna 1b and the second sector first-system antenna 2b.

As previously described, in accordance with the wireless communication base station of the 15th embodiment mode of the present invention, while a plurality of transmission means and a plurality of receiving means are arranged in the same transmission/receiving unit, even when the failure occurs in one of the arbitrary transmission/receiving units, the receiving functions of the respective sectors can be operated, or are operable as a single branch, and the transmission functions of the respective sectors can be operated under normal condition, and furthermore, the single antenna can be commonly used in both the transmission operation and the receiving operation, while both the transmission and the receiving are made in the same unit. As a consequence, the base station apparatus can be made compact, while the communication area and the communication capacity are not largely lowered.

It should also be noted that when more than 3 sectors are employed, or more than 3 diversity systems are employed, if a similar arrangement to the above-explained arrangement is used, then a similar effect to the above-described effect may be achieved. Also, even when the above-explained antenna commonly-using means is arranged at an external position with respect to the base station apparatus, a similar effect may be achieved.

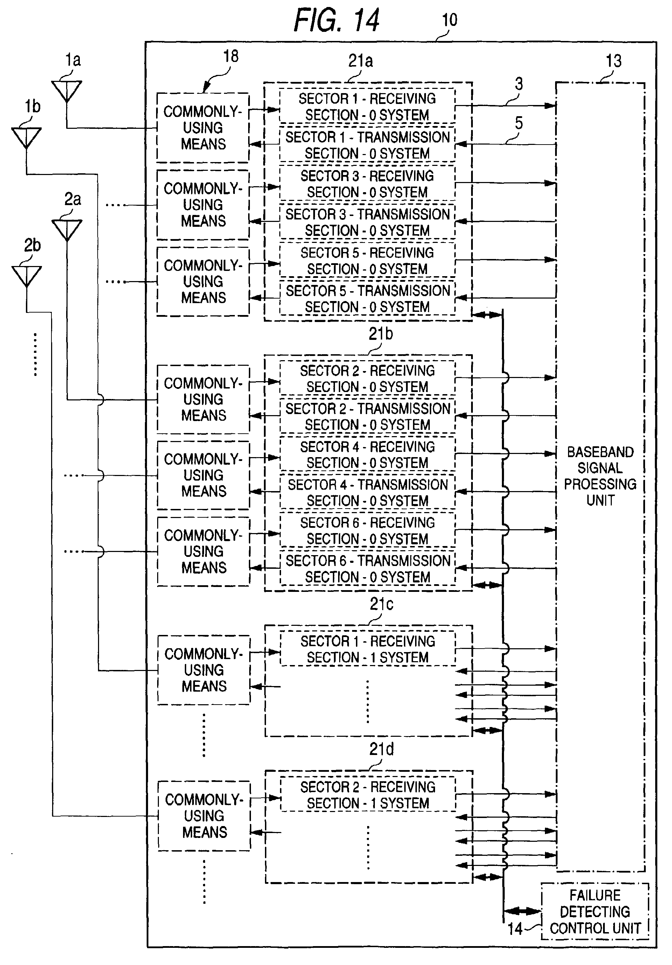

Next, a description will now be made of a 16th embodiment mode of the present invention. Fig. 14 is a structural diagram to show a wireless communication base station according to the 16th embodiment mode of the present invention. The wireless communication base station shown in Fig. 14 corresponds to such a base station that the own wireless cell is subdivided into, for example, 6 sectors, a diversity transmission is carried out by using two sets of antennas in each of these sectors. The wireless communication base station is arranged by 12 systems of antennas in total, and a main body 10 of a base station apparatus. The 12 systems of antennas are constituted by two systems of each of the six sectors, namely a first sector zeroth-system antenna 1a; a first sector first-system antenna 1b; a second sector zeroth-system antenna 2a; a second sector first-system antenna 2b and so on.

The main body 10 of the base station apparatus is arranged by 12 sets of antenna commonly-using means 18 for commonly using, for example, the above-described 12 systems of antennas; 4 sets of first transmission/receiving unit 21a to fourth transmission unit 21d; a baseband signal processing unit 13; and a failure sensing/controlling unit 14. The first to fourth transmission/receiving units 21a to 21d are equipped with transmission means for converting the transmission baseband signal 5 into the transmission signals outputted from the respective antennas, and receiving means for converting the signals received by the respective antennas into, for instance, the receiving baseband signals 3. The baseband signal processing unit 13 performs the diversity signal processing operation of the receiving baseband signals 3 outputted from the respective transmission/receiving units 21a to 21d, typically known as the diversity signal process of the maximum ratio synthesizing operation. Also, this baseband signal processing unit 13 outputs the transmission baseband signals 5 corresponding to the transmission diversity to the transmission units.

The first transmission/receiving unit 21a is provided with 3 systems of transmission means and also 3 systems of receiving means, which transmit and receive signals via the respective zeroth-system antennas in the first sector, the third sector, and the fifth sector.

The second transmission/receiving unit 21b is provided with 3 systems of transmission means and also 3 systems of receiving means, which transmit and receive signals via the respective zeroth-system antennas in the second sector, the fourth sector, and the sixth sector.

The third transmission/receiving unit 21c is provided with 3 systems of transmission means and also 3 systems of receiving means, which transmit and receive signals via the respective first-system antennas in the first sector, the third sector, and the fifth sector.

The fourth transmission/receiving unit 21d is provided with 3 systems of transmission means and also 3 systems of receiving means, which transmit and receive signals via the respective first-system antennas in the second sector, the fourth sector, and the sixth sector.

Next, operations of the wireless communication base station with employment of the above-described arrangement will now be described. In the arrangement of the 16th embodiment mode, for example, when a failure happens to occur in the first transmission/receiving unit 21a, the failure sensing/controlling unit 14 senses the occurrence of this failure, and then performs the following control operations. That is, the power supply of the first transmission/receiving unit 21a is stopped, and an alarm signal is produced, for example, a light emission of an LED which can be recognized by a maintenance monitoring operator, and the notification to the baseband signal processing unit 13 is made.

At this time, the baseband signal processing unit 13 executes such a signal process operation that the transmission baseband signals 5 are outputted to the transmission means, and also the receiving baseband signals 3 are outputted from the receiving means provided in the second transmission/receiving unit 21b, the third transmission/receiving unit 21c, and the fourth transmission/receiving unit 21d.

In other words, since the first transmission/receiving unit 21a fails, the diversity transmissions/receiving operations in the first sector, the third sector, and the fifth sector cannot be carried out. However, the signals can be transmitted/received via the respective first-system antennas, since the third transmission/receiving unit 21c is operated under normal condition.

Also, in the first sector, the third sector, and the fifth sector, since the diversity gain is lowered, either the communication area of this sector becomes narrow or the quality of the wireless communication is deteriorated. However, the diversity transmission/receiving may satisfactorily function in the second sector, the fourth sector, and the sixth sector, which are located adjacent to the above-described first, third, and fifth sectors. For instance, a wireless terminal which is communicated with the base station in the first sector is smoothly handed over the above-explained adjoining sector whose communication condition becomes better, so that the wireless communication can be sufficiently maintained.

In other words, in accordance with the wireless communication base station of the 16th embodiment mode of the present invention, while a plurality of transmission means and a plurality of receiving means are arranged in the same transmission/receiving unit, even when the failure occurs in one of the arbitrary transmission/receiving units, the transmission/receiving functions of the respective sectors can be operated as a single branch, although the diversity gain is lowered. Furthermore, the transmission/receiving functions of the respective sectors can be smoothly handed over the adjoining sectors thereof where the diversity transmission/receiving functions are operated under normal condition. As a consequence, the base station apparatus can be made compact, while the communication area and the communication capacity are not largely lowered.

It should be understood that in this tenth embodiment mode, such an arrangement having two systems of the diversity transmission in the six sectors has been explained. In such a case that more than four sectors are employed and more than two diversity systems are employed, if a similar arrangement to the above-explained arrangement is employed, then a similar effect to the above-described effect may be achieved. Also, even when the above-explained antenna commonly-using means is arranged outside the base station apparatus, a similar effect may be achieved.

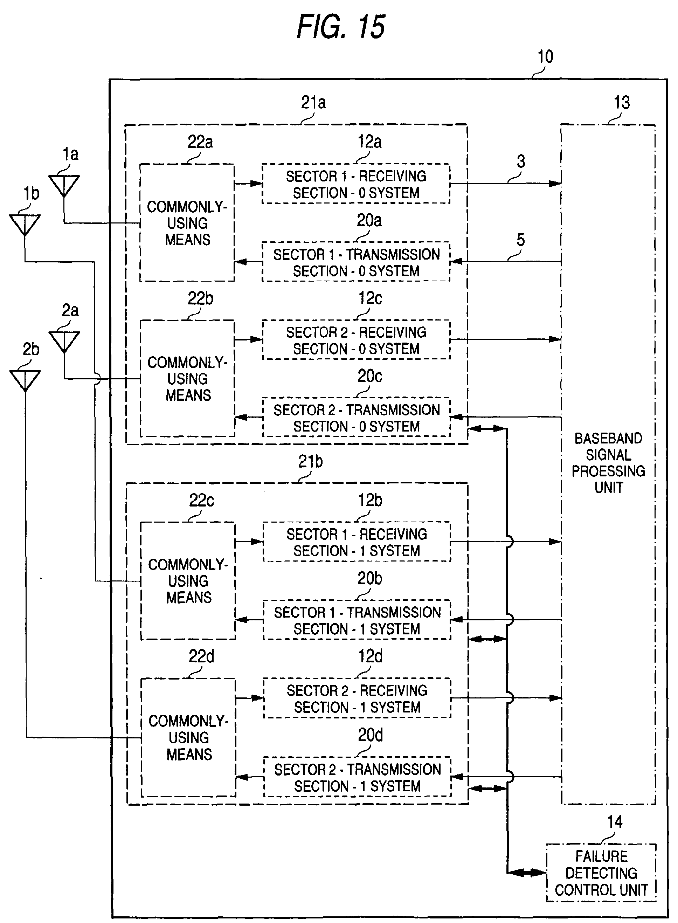

Next, a description will now be made of a wireless communication base station according to a 17th embodiment mode of the present invention. The wireless communication base station shown in Fig. 15 corresponds to such a base station that, for instance, while the own wireless cell is subdivided into two sectors, a diversity transmission/receiving is carried out by two sets of antennas in the respective sectors. In this case, the base station is arranged by antennas of 4 systems, namely, a first sector zeroth-system antenna 1a; a first sector first-system antenna 1b; a second sector zeroth-system antenna 2a; and a second sector first-system antenna 2b, and further a main body 10 of a base station apparatus.

The main body 10 of the base station apparatus is arranged by a receiving section 12a to a receiving section 12d of four systems; a transmission sections 20a to 20d of four systems; a first transmission/receiving unit 21a; a second transmission/receiving unit 21b; a baseband signal processing unit 13; and a failure sensing/controlling unit 14. The receiving sections 12a to 12d correspond to receiving means for converting the signals received by the respective antennas into, for example, the receiving baseband signal 3. The transmission sections 20a to 20d correspond to transmission means for converting, for example, the transmission baseband signal 5 into the signals to be transmitted from the respective antennas. The first transmission/receiving unit 21a is provided with first antenna commonly-using means 18a, second antenna commonly-using means 18b, the receiving section 12a, the receiving section 12c, the transmission section 20a, and also the transmission section 20c. The second transmission/receiving unit 21b is provided with third antenna commonly-using means 18c, fourth antenna commonly-using means 18d, the receiving section 12b, the receiving section 12d, the transmission section 20b, and also the transmission section 20d. The baseband signal processing unit 13 executes a signal process operation such as the diversity signal process operation by which the receiving baseband signals 3 outputted from the respective receiving sections 12a to 12d are synthesized with each other by way of, for example, a maximum synthesizing ratio. Also, the baseband signal processing unit 13 outputs the transmission baseband signals 5 corresponding to the transmission diversity to the transmission sections 20a to 20d. The failure sensing/controlling unit 14 senses failures occurred in the first transmission/receiving unit 21a and the second transmission/receiving unit 21b to perform various control operations. For instance, an alarm signal is produced, and/or a supply of electric power is interrupted.

The main body of the base station apparatus, according to this embodiment mode, can be made relatively small, which may be arranged in the vicinity of the antennas. While the receiving signal amplifying means is no longer required to be externally provided with the main body of the base station apparatus, even when the antenna commonly-using means is mounted inside this main body, the resulting base station apparatus main body can achieve satisfactory functions.

Next, a description will now be made of operations of the wireless communication base station with employment of the above-explained arrangement. In the above-described arrangement, for example, when a failure happens to occur in the first transmission/receiving unit 21a, the failure sensing/controlling unit 14 senses the occurrence of this failure, and then performs the following control operations. That is, the power supply of the first transmission/receiving unit 21a is stopped, and an alarm signal is produced, for example, a light emission of an LED which can be recognized by a maintenance monitoring operator. At this times, the second transmission/receiving unit 21b of the base station apparatus main body 10 can execute the transmission/receiving process operations for the first-system antennas 1b and 2b of the first sector and the second sector.

In other words, in the case that a failure happens to occur in the first transmission/receiving unit 21a, or the first transmission/receiving unit 21a is being replaced, the main body 10 of the base station apparatus can execute the receiving process operation of the signals received by both the first sector first-system antenna 1b and the second sector first-system antenna 2b, and also can output the transmission signals to both the first sector first-system antenna 1b and the second sector first-system antenna 2b.

That is to say, in accordance with the wireless communication base station of the 17th embodiment mode of the present invention, while a plurality of transmission means, a plurality of receiving means, and the antenna commonly-using means are arranged in the same transmission/receiving unit, even when the failure occurs in one of the arbitrary transmission/receiving units, the receiving and transmission functions of the respective sectors can be operated, or are operable as a single branch, although the diversity gain is lowered. As a consequence, the base station apparatus can be made compact, while the communication area and the communication capacity are not largely lowered.

Next, an 18th embodiment mode of the present invention will now be described. A wireless communication base station according to the 18th embodiment mode of the present invention is featured by that in the above-explained arrangements according to the 12th embodiment mode to the 17th embodiment mode, this wireless communication base station is wireless-communicated with a wireless terminal apparatus by way of the code division multiplexing system. This wireless terminal apparatus owns a signal processing unit for performing a sector-to-sector diversity process operation of receiving signals derived from different sectors, and also another signal processing unit for executing a diversity receiving process operation of transmission signals transmitted from different antennas of the base station.

The diversity receiving process of the wireless terminal apparatus implies, for instance, the Rake receiving system, and this Rake receiving system selects several signals having superior qualities from a plurality of receiving paths of signals which are transmitted from a plurality of different antennas of the base station, and then synthesizes the selected signals with each other.

Referring now to Fig. 11, operations of the 18th embodiment mode of the present invention will now be described. The baseband signal processing unit 13 of the base station apparatus main body owns the following functions. That is, for instance, a receiving which has been code-division-multiplexed by the spread spectrum system is processed by the despreding process operation, and then a desirable receiving signal component is derived by executing the sector-to-sector diversity receiving process operation. Also, a spread process operation of transmission signals is carried out which are code-division-multiplexed by way of the spread spectrum system.

When a wireless cell of a wireless communication base station in the 18th embodiment mode is constituted by a sector structure as shown in Fig. 18, for instance, in the case that a wireless terminal which is communicated with the above-explained wireless communication base station is located in the vicinity of a boundary between a first sector 25a and a second sector 25b, since an antenna of this base station owns a wider directivity characteristic than 60 degrees as represented in Fig. 19, a wireless communication between the base station and the wireless terminal is carried out for signals which are transmitted, or received via the first sector zeroth-system antenna 1a; the first sector first-system antenna 1b; the second sector zeroth-system antenna 2a; and the second sector first-system antenna 2b.

For example, when a failure happens to occur in the first transmission unit 19a, the failure sensing/controlling unit 14 senses the occurrence of this failure, and then performs the following control operations. That is, the power supply of the first transmission unit 19a is stopped, and an alarm signal is produced, for example, a light emission of an LED which can be recognized by a maintenance monitoring operator and the notification to the baseband signal processing unit 13 is controlled.

At this time, in the baseband signal processing unit 13, outputting of the transmission baseband signal 5 to the first transmission unit 19a is stopped. Also, this baseband signal processing unit 13 executes such a signal process operation that the transmission baseband signal 5 is outputted to the transmission sections provided in the second transmission unit 19b, the third transmission unit 19c, and the fourth transmission unit 19d.

In other words, since the failure occurs in the first transmission unit 19a, the signals cannot be transmitted from the zeroth-system antennas of the first sector, the third sector, and the fifth sector. However, since the third transmission unit 19c is operated under normal condition, the transmission signals can be transmitted from the respective first-system antennas.

Also, since the signals are transmitted by a single branch in the first sector, the third sector, and the fifth sector, either the communication area of this sector becomes narrow or the quality of the wireless communication is deteriorated. However, the transmission from the zeroth-system/first-system antennas may satisfactorily function in the second sector, the fourth sector, and the sixth sector, which are located adjacent to the above-described first, third, and fifth sectors. As a result, when the wireless terminal is located in the vicinity of the boundary between the first sector 25a and the second sector 25b, the Rake receiving is available by employing the signals transmitted from the 3-systems of antennas, and also, the wireless communication can be maintained while keeping the high diversity gain.

In other words, in accordance with the wireless communication base station of the 18th embodiment mode of the present invention, even when the failure occurs in one of the arbitrary unit, the communication between the wireless terminal and the base station can be performed by diversity-processing either the transmitted signals or the received signals via a large number of antennas. As a consequence, the base station apparatus can be made compact, while the communication area and the communication capacity are not largely lowered.

Next, a 19th embodiment mode of the present invention will now be described. The 19th embodiment mode of the present invention is featured by employing the above-explained wireless communication base stations according to the first embodiment mode to the 18th embodiment mode so as to constitute a wireless communication system.

In accordance with the wireless communication base station, even when the unit of the base station is integrated to be made compact, there are no large deteriorations in the communication capacity and the communication quality, while a failure happens to occur in this base station unit and also the maintenance work thereof is carried out.

In other words, in accordance with the wireless communication system according to the 19th embodiment mode of the present invention, while the base station apparatus is made compact, or is driven in the power save mode, it is possible to construct such a wireless communication system capable of having a satisfactory communication capacity and a stable communication quality.

As previously described, in accordance with the present invention, even when the failure occurs in one of the arbitrary receiving units, the receiving functions of the respective sectors can be operated as a single branch, although the diversity gain is lowered. As a consequence, the base station apparatus can be made compact, while the communication area and the communication capacity are not largely lowered. Furthermore, the receiving functions of the respective sectors can be smoothly handed over the adjoining sectors thereof where the diversity receiving functions are operated under normal condition. As a consequence, the base station apparatus can be made compact, while the communication area and the communication capacity are not largely lowered.

Also, even when the failure occurs in one of the arbitrary receiving signal amplifying units, the receiving functions of the respective sectors can be operated, or are operable as a single branch, although the diversity gain is lowered. As a consequence, the base station apparatus can be made compact, while the communication area and the communication capacity are not largely lowered.

Furthermore, the receiving functions of the respective sectors can be smoothly handed over the adjoining sectors thereof where the diversity receiving functions are operated under normal condition. As a consequence, the base station apparatus can be made compact, while the communication area and the communication capacity are not largely lowered.

Also, even when the failure occurs in one of the arbitrary receiving signal amplifying units, or one of the arbitrary receiving units, the receiving functions of the respective sectors can be operated, or are operable as a single branch, although the diversity gain is lowered. As a consequence, the base station apparatus can be made compact, while the communication area and the communication capacity are not largely lowered. The wireless communication base station can simply reduce unnecessary power consumption.

Furthermore, even when the failure occurs in one of the arbitrary receiving signal amplifying units, or one of the arbitrary receiving units, the receiving functions of the respective sectors can be operated as a single branch, although the diversity gain is lowered. Furthermore, the receiving functions of the respective sectors can be smoothly handed over the adjoining sectors thereof where the diversity receiving functions are operated under normal condition. As a consequence, the base station apparatus can be made compact, while the communication area and the communication capacity are not largely lowered. Also, the wireless communication base station can simply reduce the unnecessary power consumption.

Furthermore, even when the failure happens to occur in any one arbitrary unit, the wireless communication base station apparatus can be made compact without largely reducing the communication area and the communication capacity, while maintaining the high diversity gain.

Also, even when the failure occurs in one of the arbitrary receiving units, the transmission functions of the respective sectors can be operated under normal condition, and furthermore, the single antenna can be commonly used in both the transmission operation and the receiving operation, although the diversity gain is lowered. As a consequence, the base station apparatus can be made compact, while the communication area and the communication capacity are not largely lowered.

Furthermore, even when the failure occurs in one of the arbitrary transmission units, the transmission functions of the respective sectors can be operated, or are operable as a single branch. As a consequence, the base station apparatus can be made compact, while the communication area and the communication capacity are not largely lowered.

Also, even when the failure occurs in one of the arbitrary transmission units, the transmission functions of the respective sectors can be operated as a single branch, although the diversity gain is lowered. Furthermore, the transmission functions of the respective sectors can be smoothly handed over the adjoining sectors thereof where the diversity transmission functions are operated under normal condition. As a consequence, the base station apparatus can be made compact, while the communication area and the communication capacity are not largely lowered.

Moreover, while the base station does not carry out such a complex process operation, even when a failure happens to occur in any one of the arbitrary units, the base station apparatus can be made compact, while the communication area and the communication capacity are not largely lowered, and also the high diversity gain is maintained.

Also, even when the failure occurs in one of the arbitrary receiving units or the arbitrary transmission units, the receiving functions, or the transmission functions of the respective sectors can be operated, or are operable as a single branch, although the diversity gain is lowered. Furthermore, the base station is arranged by commonly using the antenna both in the transmission operation and the receiving operation. As a consequence, the base station apparatus can be made compact, while the communication area and the communication capacity are not largely lowered. Furthermore, the unnecessary power consumption occurred during either the failure or the maintenance can be reduced.

Furthermore, the diversity transmission functions, or the diversity receiving functions of the respective sectors can be smoothly handed over the adjoining sectors thereof where the diversity transmission, or receiving functions are operated under normal condition. As a consequence, the base station apparatus can be made compact, while the communication area and the communication capacity are not largely lowered. Also, the unnecessary power consumption required while the failure occurs, or the maintenance is carried out can be reduced.

Also, even when the failure occurs in one of the arbitrary receiving signal amplifying units, or one of the arbitrary receiving units, or the arbitrary transmission units, the receiving functions, or transmission functions of the respective sectors can be operated, or are operable as a single branch, although the diversity gain is lowered. Furthermore, the antenna is commonly used in both the transmission and the receiving operation. As a consequence, the base station apparatus can be made compact, while the communication area and the communication capacity are not largely lowered. The wireless communication base station can simply reduce unnecessary power consumption required during the occurrence of failure, or the maintenance.

In addition, while a plurality of transmission means and a plurality of receiving means are arranged in the same transmission/receiving unit, even when the failure occurs in one of the arbitrary transmission/receiving units, the receiving functions of the respective sectors can be operated, or are operable as a single branch, and the transmission functions of the respective sectors can be operated under normal condition, and furthermore, the single antenna can be commonly used in both the transmission operation and the receiving operation, while both the transmission and the receiving are made in the same unit. As a consequence, the base station apparatus can be made compact, while the communication area and the communication capacity are not largely lowered.

Also, the transmission/receiving functions of the respective sectors can be smoothly handed over the adjoining sectors thereof where the diversity transmission/receiving functions are operated under normal condition. As a consequence, the base station apparatus can be made compact, while the communication area and the communication capacity are not largely lowered.

Furthermore, while a plurality of transmission means, a plurality of receiving means, and the antenna commonly-using means are arranged in the same transmission/receiving unit, even when the failure occurs in one of the arbitrary transmission/receiving units, the receiving and transmission functions of the respective sectors can be operated, or are operable as a single branch, although the diversity gain is lowered. As a consequence, the base station apparatus can be made compact, while the communication area and the communication capacity are not largely lowered.

Also, even when the failure occurs in one of the arbitrary unit, the communication between the wireless terminal and the base station can be performed by diversity-processing the transmitted signals or the received signals via a large number of antennas. As a consequence, the base station apparatus can be made compact, while the communication area and the communication capacity are not largely lowered.

In addition, while the base station apparatus is made compact, or is driven in the power save mode, it is possible to construct such a wireless communication system capable of having a satisfactory communication capacity and a stable communication quality.

## Claims

1. A wireless communication base station for performing a wireless communication, while a wireless cell corresponding to a range where one base station performs a wireless communication is subdivided into a plurality of sectors, comprising:
a plurality of antennas installed in order that said plural sectors execute antenna diversity receiving with respect to each of said sectors;
receiving means for processing receiving signals received by said plurality of antennas; and
a plurality of receiving units provided with plural sets of said receiving means; wherein:
said receiving means provided in said receiving unit is so arranged as to process receiving signals received by the antennas of the different sectors from each other.

2. A wireless communication base station as claimed in claim 1 wherein:
in such a wireless communication base station for performing a wireless communication, while said wireless cell is subdivided into at least four sectors,
the receiving means provided in said receiving unit is so arranged as to process receiving signals received by antennas of sectors different from each other, which are not located adjacent to each other.

3. A wireless communication base station for performing a wireless communication, while a wireless cell corresponding to a range where one base station performs a wireless communication is subdivided into a plurality of sectors, comprising:
a plurality of antennas installed in order that said plural sectors execute antenna diversity receiving with respect to each of said sectors;
a main body of a base station apparatus for processing receiving signals;
receiving signal amplifying means for amplifying the receiving signals received by said antennas;
a coaxial cable for transmitting the receiving signals between said receiving signal amplifying means and said main body of the base station apparatus; and
a plurality of receiving signal amplifying units provided with plural sets of said receiving signal amplifying means; wherein:
said receiving signal amplifying means employed in said receiving signal amplifying unit is so arranged as to amplify receiving signals received by the antennas of the different sectors.

4. A wireless communication base station as claimed in claim 3 wherein:
in such a wireless communication base station for performing a wireless communication, while said wireless cell is subdivided into at least four sectors,
the receiving signal amplifying means provided in said receiving signal amplifying unit is so arranged as to amplify receiving signals received by antennas of sectors different from each other, which are not located adjacent to each other.

5. A wireless communication base station for performing a wireless communication, while a wireless cell corresponding to a range where one base station performs a wireless communication is subdivided into a plurality of sectors, comprising:
a plurality of antennas installed in order that said plural sectors execute antenna diversity receiving with respect to each of said sectors;
a main body of a base station apparatus for processing receiving signals;
receiving signal amplifying means for amplifying the receiving signals received by said antennas;
a coaxial cable for transmitting the receiving signals between said receiving signal amplifying means and said main body of the base station apparatus; and
a plurality of receiving signal amplifying units provided with plural sets of said receiving signal amplifying means; wherein:
said receiving signal amplifying means employed in said receiving signal amplifying unit is so arranged as to amplify receiving signals received by the antennas of the different sectors;
said main body of the base station apparatus is comprised of:
receiving means for processing the receiving signals received by said antennas; and
a plurality of receiving units provided with plural sets of said receiving means; wherein:
among the receiving signals amplified by said receiving signal amplifying means, said main body of the base station apparatus is so arranged as to process the receiving signal amplified by the same receiving signal amplifying unit by the same receiving unit.

6. A wireless communication base station as claimed in claim 5 wherein:
in such a wireless communication base station for performing a wireless communication, while said wireless cell is subdivided into at least four sectors,
the receiving signal amplifying means provided in said receiving signal amplifying unit is so arranged as to amplify receiving signals received by antennas of sectors different from each other, which are not located adjacent to each other, and also the receiving means provided in said receiving unit is so arranged as to process the receiving signals received by the antennas of the sectors different from each other, which are not located adjacent to each other.

7. A wireless communication base station as claimed in any one of the preceding claims 1 to 6 wherein:
said wireless communication base station is such a wireless communication base station for performing a wireless communication by way of the code-division multiplexing system; and said wireless base station is comprised of a signal processing unit for performing a diversity process among the sectors of the receiving signals received from the sectors different from each other.

8. A wireless communication base station as claimed in any one of the preceding claims 1 to 6, further comprising:
transmission means for transmitting a transmission signal every sector; and
commonly-using means for commonly using said antenna in transmission/receiving modes; wherein:
said antenna owns such an antenna used to transmit the transmission signal, and also such an antenna for transmitting/receiving the signal by said commonly-using means.

9. A wireless communication base station for performing a wireless communication, while a wireless cell corresponding to a range where one base station performs a wireless communication is subdivided into a plurality of sectors, comprising:
a plurality of antennas installed in order that said plural sectors execute antenna diversity transmissions with respect to each of said sectors;
transmission means for outputting transmission signals transmitted by said antennas; and
a plurality of transmission units provided with plural sets of said transmission means; wherein:
the transmission means provided in said transmission unit is so arranged as to output the transmission signals from the antennas of the sectors different from each other.

10. A wireless communication base station as claimed in claim 9 wherein:
in such a wireless communication base station for performing a wireless communication, while said wireless cell is subdivided into at least four sectors,
the transmission means provided in said transmission unit is so arranged as to transmit transmission signals from antennas of sectors different from each other, which are not located adjacent to each other.

11. A wireless communication base station as claimed in claim 9, or claim 10 wherein:
said wireless communication base station is such a wireless communication base station for performing a wireless communication by the code-division multiplexing system;
a wireless terminal apparatus having a signal processing unit performs a wireless communication by said code-division multiplexing system; and said signal processing unit of the wireless terminal apparatus performs a diversity receiving process operation of the transmission signals transmitted from the antennas different from each other, which are employed in said wireless communication base station.

12. A wireless communication base station for performing a wireless communication, while a wireless cell corresponding to a range where one base station performs a wireless communication is subdivided into a plurality of sectors, comprising:
a plurality of antennas installed in order that said plural sectors execute antenna diversity receiving with respect to each of said sectors;
commonly-using means for commonly using said antennas in both transmission and receiving operations;
receiving means for processing receiving signals received by said antennas;
transmission means for outputting transmission signals transmitted from said antennas;
a plurality of receiving units provided with plural sets of said receiving means; and
a plurality of transmission units provided with plural sets of said transmission means; wherein:
the receiving means provided in said receiving unit is so arranged as to process receiving signals received by the antennas of the sectors different from each other; and further, the transmission means provided in said transmission unit is so arranged as to output transmission signals from the antennas of the sectors different from each other.

13. A wireless communication base station as claimed in claim 12 wherein:
in such a wireless communication base station for performing a wireless communication, while said wireless cell is subdivided into at least four sectors,
the transmission means provided in said transmission unit is so arranged as to transmit transmission signals from antennas of sectors different from each other, which are not located adjacent to each other; and
the receiving means provided in said receiving unit is so arranged as to process receiving signals received by antennas of sectors different from each other, which are not located adjacent to each other.

14. A wireless communication base station as claimed in claim 12, or claim 13 wherein:
the wireless communication base station for performing the wireless communication, while said wireless cell is subdivided into a plurality of sectors, comprising:
a plurality of antennas installed in order that said plural sectors execute antenna diversity receiving with respect to each of said sectors;
a main body of a base station apparatus for processing receiving signals;
receiving signal amplifying means for amplifying the receiving signals received by said antennas;
a coaxial cable for transmitting the receiving signals between said receiving signal amplifying means and said main body of the base station apparatus;
commonly-using means for commonly using the antennas in transmission/receiving modes; and
a plurality of receiving signal amplifying units provided with plural sets of said receiving signal amplifying means, and plural sets of said commonly-using means; wherein:
among the receiving signals amplified by said receiving signal amplifying means, said main body of the base station apparatus is so arranged as to process the receiving signal amplified by the same receiving signal amplifying unit by the same receiving unit.

15. A wireless communication base station for performing a wireless communication, while a wireless cell corresponding to a range where one base station performs a wireless communication is subdivided into a plurality of sectors, comprising:
a plurality of antennas installed in order that said plural sectors execute antenna diversity receiving with respect to each of said sectors;
commonly-using means for commonly using said antennas in both transmission and receiving operations;
receiving means for processing receiving signals received by said antennas;
transmission means for outputting transmission signals transmitted from said antennas;
a plurality of receiving units provided with plural sets of said receiving means; and
a plurality of transmission/receiving units provided with plural sets of said transmission means, and plural sets of said receiving means; wherein:
the receiving means provided in said transmission/receiving unit is so arranged as to process receiving signals received by the antennas of the sectors different from each other; and further, both said receiving means and said transmission means for commonly-using said antennas are arranged within the same transmission/receiving unit.

16. A wireless communication base station as claimed in claim 15 wherein:
in such a wireless communication base station for performing a wireless communication, while said wireless cell is subdivided into at least four sectors,
the transmission means provided in said transmission/receiving unit is so arranged as to transmit transmission signals from antennas of sectors different from each other, which are not located adjacent to each other; and the receiving means provided in said transmission/receiving unit is so arranged as to process receiving signals received from antennas of sectors different from each other, which are not located adjacent to each other.

17. A wireless communication base station as claimed in claim 15, or claim 16 wherein:
said commonly-using means is built in the transmission/receiving unit.

18. A wireless communication base station as claimed in any one of the preceding claims 12, 13, 15 to 16 wherein:
said wireless communication base station is such a wireless communication base station for performing a wireless communication by way of the code-division multiplexing system; and said wireless base station is comprised of a signal processing unit for performing a diversity process among the sectors of the receiving signals received from the sectors different from each other; and further, a wireless terminal apparatus having a signal processing unit performs a wireless communication by said code-division multiplexing system; and said signal processing unit of the wireless terminal apparatus performs a diversity receiving process operation of the transmission signals transmitted from the antennas different from each other, which are employed in said wireless communication base station.
